# EUROPEAN PATENT APPLICATION

(11) **EP 2 222 036 A1**
(43) Date of publication of application: **25.08.2010**
(21) Application number: 08852099.4
(22) Date of filing: 18.11.2008
(51) Int. Cl.: H04L 12/56, H04W 8/06

(54) **ADDRESS ALLOCATION METHOD, ADDRESS ALLOCATION SYSTEM, MOBILE NODE, AND PROXY NODE**

(30) Priority: 20.11.2007 JP 2007300711
(71) Applicant: Panasonic Corporation, Kadoma-shi Osaka 571-8501 (JP)
(72) Inventor: ASO, Keigo, Osaka 540-6207 (JP); HIRANO, Jun, saka 540-6207 (JP); LIM, Chun Keong Benjamin, Tai Seng Industrial Estate Singapore 534415 (SG); JEYATHARAN, Mohana Dhamayanthi, Tai Seng Industrial Estate Singapore 534415 (SG); NG, Chan Wah, Tai Seng Industrial Estate Singapore 534415 (SG); KOH, Tien Ming Benjamin, Tai Seng Industrial Estate Singapore 534415 (SG); TAN, Pek Yew, Tai Seng Industrial Estate Singapore 534415 (SG)
(74) Representative: Grünecker, Kinkeldey, Stockmair & Schwanhäusser Anwaltssozietät
(86) International application number: PCT/JP2008/003354
(87) International publication number: WO 2009/066438

(57) **Abstract**

Disclosed is a technique for switching a forwarding address of a packet destined for a mobile node in a local mobility domain when the mobile node has a plurality of interfaces so that the packet will be forwarded to the mobile node. According to the technique, an MN 101 receives network information 40 including a domain ID 402 from a network through two or more IFs 1010 and 1011. Based on the domain ID 402 in the network information received, when determining that the IFs 1010 and 1011 are attached to the same domain, the MN 101 decides to allocate the same address to the IFs 1010 and 1011, and requests MAGs 111 and 112 connected to the IFs 1010 and 1011, respectively, to bind the same address to each of link identifiers of the IFs 1010 and 1011. Based on the request, the MAGs 111 and 112 perform binding to forward, to the MN 101, packets destined to the same address of the MN 101.

## Description

### TECHNICAL FIELD

The present invention relates to an address allocation method for allocating an address to each of a plurality of interfaces included in a mobile node, an address allocation system, the mobile node, and a proxy node.

### BACKGROUND ART

Recently, cellular communications have been improved and become part of everyday life of many people. Further, cellular telephones today have more functions than those of tools used for voice communication alone. Newer generation telephone sets have the function to allow users to access the Internet, for example, for data communication. However, cellular operators open their systems to new forms of security threats because they are offering Internet services. Those affecting the system integrity and reliability are denial of services or packet attacks. For example, attackers armed with computers can send packets to an inactive internet protocol (IP) address in the system of a cellular operator. Since the IP address is constructed with a valid prefix controlled by the cellular operator, the system of the cellular operator tries to explore the path to this IP address. This continuous but meaningless exploration causes the waste of effective system resources, resulting in denying valid subscribers use of the service offered by the cellular operator. Such an attack is known as a denial of service attack.

Therefore, the cellular operator needs to update a security protocol in order to ensure that the system is always protected. For example, in order to minimize the exposure to the denial of service attack, the cellular operator performs packet filtering in the system. An entity within the system of the cellular operator has a policy describing actions taken when a packet cannot be routed to a destination address. For example, when a router cannot find the next valid hop for the destination address of the packet in a routing cache, the router sends the packet to a central default routing gateway in the system. As another example, when the system configures a list of all available routing paths, if a router receives a packet along a routing path that does not exist in this list, the router will discard the packet as a false packet.

The Long Term Evolution (LTE) project in the Third Generation Partnership Project (3GPP) aims to adapt the current universal mobile telecommunications system (UMTS) to the fourth generation (4G) mobile communication system. A feature of the 4G network is to shift from the current combined circuit and packet-switched network to an all-IP system. The all-IP system is a network using IP for communication and signaling. In order to shift to the all-IP system, the existing UMTS architecture needs evolving, and this work is being prepared as the System Architecture Evolution (SAE) in 3GPP. In order to shift to 4G, cellular operators have to consider how to support the mobility of their subscribers in the all-IP system.

Similarly, International Mobile Telecommunications-2000 (IMT-2000) being worked in Third Generation Partnership Project 2 (3GGP2) aims to improve the speed and simplicity of wireless communications in order to make high-quality mobile multimedia communication a global market. Upon working on an IP-based mobile system, cellular operators developing IMT-2000 also have to consider how to support the mobility of their subscribers in the all-IP system.

Proxy mobile IPv6 (PMIPv6) is considered by cellular operators as a candidate to meet these demands. Non-Patent Document 1 cited below describes PMIPv6 as a mobility management configuration in which a mobile node is freed from signaling related to mobility while moving in a local mobility domain. A proxy located in the local mobility domain helps the mobile node with mobility management. This mobility management method is called "network-based mobility management."

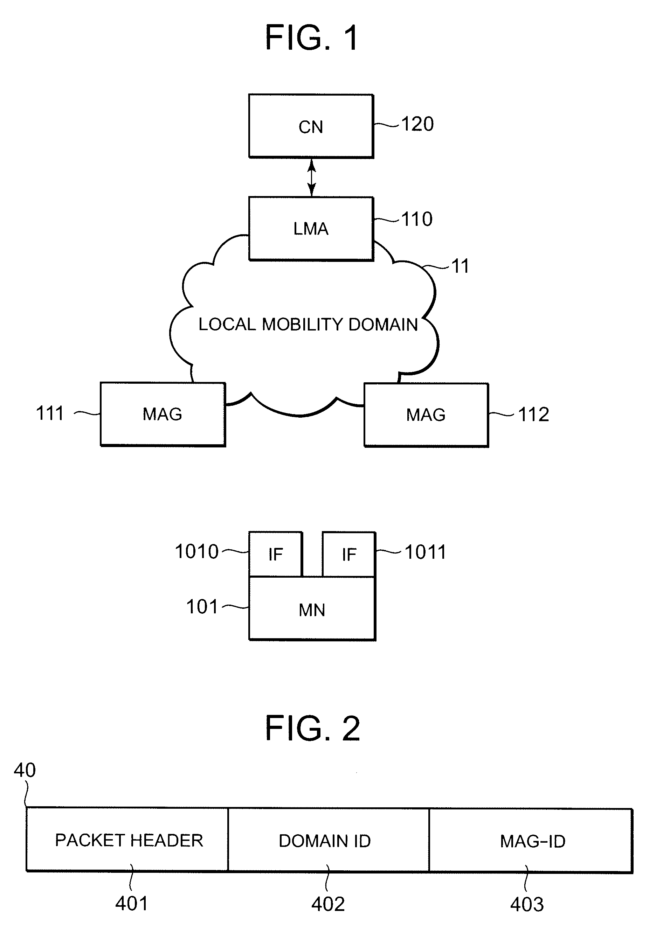

FIG. 1 shows a system using this "network-based mobility management." A mobile node (MN) 101 is located in a local mobility domain 11. An interface (IF) 1010 of the MN 101 is connected to a mobile access gateway (MAG) 111, and at this time, an identifier (MN-ID) of the MN 101 is presented as part of an access authentication procedure. The MN-ID is typically used to associate a policy profile of the MN 101 acquirable from a local server, not shown. This policy profile includes the provisioned network-based mobility service characteristics and other related parameters, such as the home network prefix allocated to the MN 101, permitted address configuration modes, roaming policy, and other parameters that are essential for providing network-based mobility service.

Upon completion of successful access authentication, the MAG 111 acquires the policy profile of the MN 101 from the local server, not shown. This means that the MAG 111 has all information necessary to perform mobility signaling for the MN 101. To this end, the MAG 111 sends router advertisement (RA) messages periodically to the MN 101 to advertise the home network prefix. When obtaining home network prefix, the MN 101 configures an IP address (e.g., home address HoA) to allow the IF 1010 to communicate. The IF 1010 can always obtain the home network prefix wherever in the local mobility domain 11 the MN 101 is located. This is because each MAG to which the MN 101 is being connected is always deriving the policy profile of the MN 101 from the local server. For example, when the MN 101 moves from a MAG 111 to another MAG 112 and the IF 1010 is connected to the MAG 112, the MAG 112 acquires the home network prefix of the MN 101 from the local server based on the MN-ID presented during the authentication procedure. Thus, the MN 101 can always use the home address irrespective of the location of the MN 101 in the local mobility domain 11.

For routing in the local mobility domain 11, an entity called a local mobility anchor (LMA 110) serves as a permanent anchor point (home agent) for each mobile node to establish a connection between the MN 101 in the local mobility domain 11 and a correspondent node (CN) 120 in a foreign network. The LMA 110 also manages the reachability state of each mobile node. Since the LMA 110 serves as the anchor point for each mobile node, the current location of each mobile node needs updating. Therefore, whenever a mobile node is connected to a MAG, the MAG sends a proxy binding update (PBU) message to the LMA 110 as a proxy node of the mobile node.

The LMA 110 can generate a routing entry of the mobile node based on the MN-ID from the PBU message. Based on this routing entry, the LMA 110 binds the home network prefix of the mobile node to a care-of address of the MAG. Further, when the PBU message optionally includes the IP address (e.g., home address) of the mobile node instead of the home network prefix, the LMA 110 binds the home address to the care-of address of the MAG. This binding enables the LMA 110 to route packets destined to the home address via an appropriate MAG.

In FIG. 1, the MN 101 establishes a connection to the MAG 111 using the IF 1010 to perform the necessary authentication procedure. Upon completion of successful authentication, the MAG 111 sends a PBU message to the LMA 110. Based on the content of the PBU message, the LMA 110 binds the home network prefix or the home address of the MN 101 to the care-of add ress of the MAG 111 in its binding cache entry (BCE). When receiving a packet destined to the home address of the MN 101 from a foreign CN 120, the LMA 110 checks the binding cache entry to find a routing path for the packet. In the system shown in FIG. 1, the LMA 110 recognizes that the packet is destined to the home address of the MN 101. The LMA 110 tunnels the packet to the MAG 111 based on the binding cache entry, and as a result, the packet is forwarded to the MN 101.

A personal device such as a cellular telephone is equipped with a plurality of interfaces, such as wireless local area network (WLAN), cellular radio, and Bluetooth (registered trademark). Therefore, its consumer already has the ability for "simultaneous connections" to networks. However, cellular operators are currently considering whether to support simultaneous connection service in their networks. It is contemplated that when detecting congestion in a local mobility domain, a cellular operator can perform load balancing based on the idea of simultaneous binding. Providing a mobile node with plural paths, the cellular operator can select which path is used to route packets destined for the mobile node.

Here, it is assumed in FIG. 1 that a local mobility domain 11 has two types of networks. As an example, suppose that the first one is a cellular network to which the MAG 111 is attached, and the second one is a WLAN to which the MAG 112 is attached. It is also assumed that the MN 101 has two interfaces, i.e., a cellular interface to be connected as IF 1010 to the MAG 111 and a WLAN interface to be connected as IF 1011 to the MAG 112. Therefore, the MN 101 can carry out simultaneous access to the local mobility domain 11.

Using an address resolution method discussed in Non-Patent Document 2 cited below, the MN 101 exchanges a series of messages with each network in the local mobility domain 11 to configure an IP address of each IF 1010 or 1011. During exchanging the messages, the MN 101 sends a Neighbor Solicitation (NS) message to inquire whether each configured IP address is being used by other devices in the network. When receiving no Neighbor Advertisement (NA) message as a response to the NS message, the MN 101 assumes that no device in the network is using the configured IP address, so that the MN 101 can allocate the IP address to its IF 1010 or 1011.

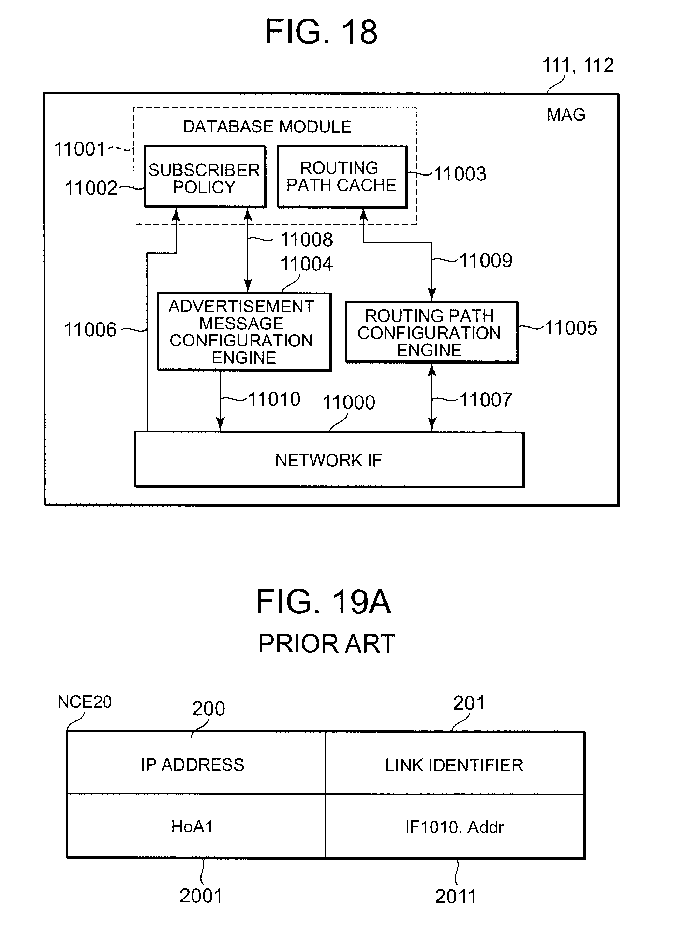

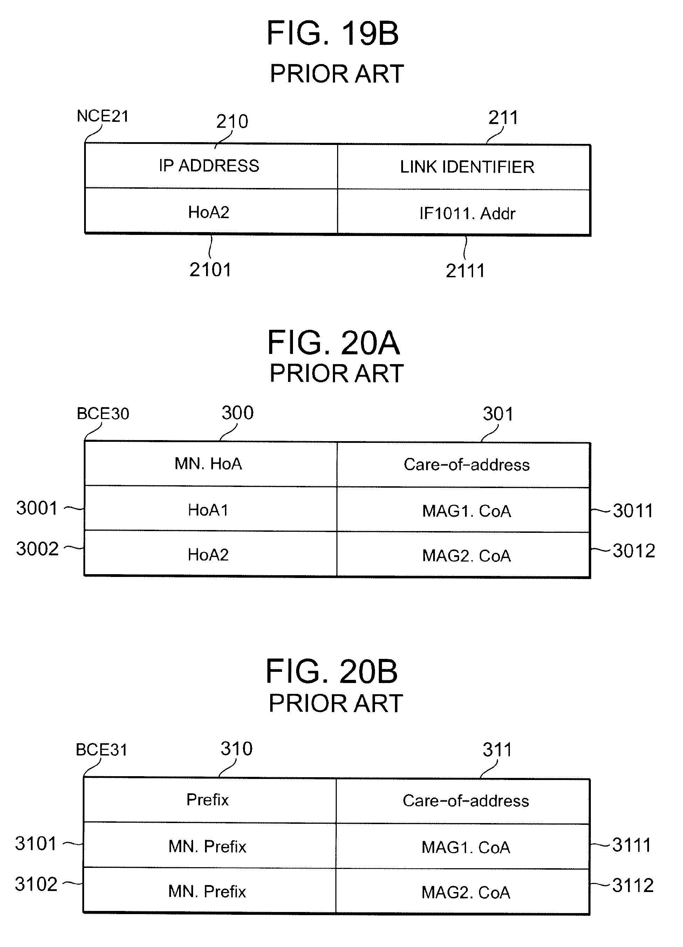

Here, it is assumed in FIG. 1 that the MN 101 allocates IP address HoA1 to the IF 1010 and IP address HoA2 to the IF 1011 to perform communication in the local mobility domain 11. When the MN 101 allocates the IP addresses HoA1 and HoA2 to the IF 1010 and the IF 1011, respectively, the MAGs 111 and 112 connected respectively to the IF 1010 and the IF 1011 can obtain the IP addresses HoA1 and HoA2. In the method, the MN 101 sends the NA message to give an instruction that the IP addresses HoA1 and HoA2 are available. Using the information in the NA message, the MAGs 111 and 112 can generate routing states for the MN 101 in the network. FIG. 19A and FIG. 19B show Neighbor Cache Entries (NCE) 20 and 21 as the routing states generated by the MAGs 111 and 112, respectively. The following describes in detail examples of generating the routing states.

According to FIG. 19A, the IF 1010 sends an NA message to advertise that HoA1 (entry 2001) is available as an IP address 200 in the cellular network. The IF 1010 describes, in this NA message, IF1010.Addr (entry 2011) as a link identifier 201 of the IF 1010 to be bound to the HoA1. The link identifier 201 represents a link between the IF 1010 and the MAG 111. The link identifier 201 may be, but not limited to, a Medium Access Control (MAC) address, a link local address, or a 3GGP wireless channel used by the IF 1010. Using the link identifier 201, the MAG 111 generates new entries 2001 and 2011 in the NCE 20, records HoA1 in the entry 2001 as the IP address 200, and records IF1010.Addr in the entry 2011 as the link identifier 201. This means that when receiving a packet destined to HoA1, the MAG 111 forwards the packet to the MN 101 based on the NCE 20 via the link of the link identifier IF1010.Addr.

Similarly, referring to FIG. 19B, the IF 1011 sends an NA message to advertise that HoA2 (entry 2101) is available as an IP address 210 in the WLAN network. The MAG 112 generates new entries 2101 and 2111 in the NCE 21, records HoA2 in the entry 2101 as the IP address 210, and records IF1011.Addr in the entry 2111 as a link identifier 211.

As a result of the above-mentioned address resolution, both of the MAGs 111 and 112 bind their care-of addresses to the LMA 110 to enable the LMA 110 to route packets destined for the MN 101 in the local mobility domain 11. As mentioned above, the routing entry in the LMA 110 can be generated regardless of either "binding by prefix" or "binding by address". The operation of the LMA 110 to route packets in the local mobility domain 11 varies depending on the method of generating the routing entry.

FIG. 20A shows a Binding Cache Entry (BCE) 30 as the routing entry generated by the LMA 110 with "binding by address". FIG. 20B shows a BCE 31 generated with "binding by prefix." Referring to FIG. 20A, the MAGs 111 and 112 send PBU messages to the LMA 110 to bind HoA1 and HoA2 as the home addresses of the MN 101 to care-of addresses MAG1.CoA and MAG2.CoA of the MAGs 111 and 112, respectively. The LMA 110 generates the BCE 30 having two columns, namely a MN.HoA column 300 and a care-of address (CoA) column 301. The column 300 contains HoA1 and HoA2 as the home addresses of the MN 101, and the column 301 contains care-of addresses MAG1.CoA and MAG2.CoA of the MAGs 111 and 112.

For example, when the MAG 111 sends a PBU message to the LMA 110 to bind HoA1 to MAG1.CoA, the LMA 110 stores HoA1 in an entry 3001 and MAG1.CoA in an entry 3011. This enables the LMA 110 to know that packets destined to HoA1 should be sent to the MN 101 via the MAG 111. Similarly, when the MAG 112 sends a PBU message to bind HoA2 to MAG2.CoA, the LMA 110 stores HoA2 in an entry 3002 and MAG2.CoA in an entry 3012. As other conventional techniques, Patent Documents 1, 2, and 3 cited below are known.
Non-Patent Document 1: S. Gundavelli, K. Leung, V. Devarapalli, K. Chowdhury, and B. Patil, "Proxy Mobile IPv6," Internet Engineering Task Force Internet Draft: draft-ietf-netlmm-proxymip6-00.txt, April 08, 2007.
Non-Patent Document 2: T. Narten, E. Nordmark and W. Simpson, "Neighbor Discovery for IP Version 6 (IPv6)," Internet Engineering Task Force Request for Comments 2461, December, 1998.
Patent document 1: J. A. Bell and E. G. Britton, US Patent Number 5,923,854 entitled "Virtual internet protocol (IP) addressing," July 13, 1999.
Patent Document 2: K. A. Dobbins, D. L. Cullerot, S. H. Negus, and W. T. Haggerty, US Patent Number 5,751,971 entitled "Internet protocol (IP) work group routing," May 12, 1998.
Patent Document 3: E. G. Britton, J. D. Haggar, T. D. Moore, A. H. Richter, and B. C. Vashaw, US Patent Number 6,775,278 entitled "Method and apparatus for generating replies to address resolution protocol requests," August 10, 2004.

Here, if the LMA 110 uses the BCE 30 generated with "binding by address" as shown in FIG. 20A, the forwarding destination of packets destined for the MN 101 cannot be changed. The reason why the LMA tries to change the forwarding destination is because of the possibility that the link being used could be congested at present. In this case, since the use of the congested link needs to be restricted on the network side, the LMA 110 needs to find an alternative route to forward the packets destined for the MN 101. However, when receiving a packet destined to HoA2, the LMA 110 cannot forward the packet to the MN 101 via the MAG 111. This is because both entries in the BCE 30 are not associated with each other, i.e., there is no entry indicating that packets destined to HoA2 can be sent via the MAG 112 and hence the LMA 110 cannot know that the MN 101 is reachable via the MAG 111.

Here, as a method of enabling the LMA 110 to know an entity related to the MN 101 in the BCE, it is considered a method of allowing the LMA 110 to perform "binding by prefix" in the local mobility domain 11. This method is recommended in Non-Patent Document 1 to handle the binding cache entry at the local mobility anchor.

FIG. 20B shows the BCE 31 as the routing entry generated by the LMA 110 with "binding by prefix." Referring to FIG. 20B, the MAGs 111 and 112 send PBU messages to the LMA 110 to bind home network prefix (MN.Prefix) of the MN 101 to care-of addresses MAG1.CoA and MAG2.CoA of the MAGs 111 and 112, respectively. The LMA 110 generates the BCE 31 having two columns, namely a home network prefix (Prefix) column 310 and a care-of address (CoA) column 311.

For example, when the MAG 111 sends a PBU message to the LMA 110 to bind MN.Prefix to MAG1.CoA, the LMA 110 stores MN.Prefix in an entry 3101 and MAG1.CoA in an entry 3111. Similarly, when the MAG 112 sends a PBU message to the LMA 110 to bind MN.Prefix to MAG2.CoA, the LMA 110 stores MN.Prefix in an entry 3102 and MAG2.CoA in an entry 3112. This method enables the LMA 110 to know that any packet destined to either of addresses (HoA1 and HoA2) configured by using MN.Prefix can be forwarded via either of the MAGs 111 and 112.

However, even when the LMA 110 uses the BCE 31 generated with "binding by prefix" as shown in FIG. 20B, the forwarding destination of packets destined for the MN 101 cannot be changed. This is because the local mobility domain 11 has a security policy that "the MAGs 111 and 112 exclude packets that do not correspond to valid routing entries in the NCEs 20 and 21, respectively." For example, when the LMA 110 forwards a packet destined to HoA2 to the MAG 111, since the MAG 111 has no valid routing entry related to HoA2 in the NCE 20, this packet is discarded.

As another countermeasure, as shown in Patent Document 3, it is considered that a plurality of interfaces located on the same link serve as backups for one another. Patent Document 3 teaches that when an interface receives a trigger signal from another, the interface functions as a backup. This trigger signal gives an instruction that both interfaces are located physically on the same link.

However, in the local mobility domain 11, the physical link of the MN 101 is emulated by the MAGs 111 and 112. Therefore, the trigger signal as mentioned above is not desirable because it propagates between the MAGs 111 and 112. The cellular operator does not desire such a function that many trigger signals as mentioned above reach the MAGs 111 and 112 because the local mobility domain 11 is geographically so large.

### DISCLOSURE OF THE INVENTION

The present invention has been made in view of the problems of the above-mentioned conventional techniques, and it is an object thereof to provide an address allocation method, an address allocation system, a mobile node, and a proxy node, capable of switching a forwarding address of a packet destined for the mobile node in a local mobility domain when the mobile node has a plurality of interfaces so that the packet can be forwarded to the mobile node.

In order to attain the above object, the present invention provides an address allocation method for allocating an address to each of a plurality of interfaces of a mobile node, the method comprising:
a step where the mobile node receives network information including a domain identifier from a network through each of the plurality of interfaces, and determines, based on the domain identifier in the network information received, whether two or more of the plurality of interfaces are attached to the same domain;
a step where the mobile node decides to allocate the same address to the two or more interfaces attached to the same domain when determining the attachment to the same domain, and requests each proxy node connected to each of the two or more interfaces to bind the same address to each link identifier of the two or more interfaces; and
a step where the proxy node performs binding based on the request and forwards, to the mobile node, a packet destined to the same address of the mobile node.

In order to attain the above object, the present invention also provides an address allocation system for allocating an address to each of a plurality of interfaces of a mobile node, the system comprising:
means for causing the mobile node to receive network information including a domain identifier from a network through each of the plurality of interfaces, and determine, based on the domain identifier in the network information received, whether two or more of the plurality of interfaces are attached to the same domain;
means for causing the mobile node to decide to allocate the same address to the two or more interfaces attached to the same domain when determining the attachment to the same domain, and request each proxy node connected to each of the two or more interfaces to bind the same address to each link identifier of the two or more interfaces; and
causing the proxy node to perform binding based on the request and forward, to the mobile node, a packet destined to the same address of the mobile node.

In order to attain the above object, the present invention further provides a mobile node in an address allocation system for allocating an address to each of a plurality of interfaces of the mobile node, the mobile comprising:
means for receiving network information including a domain identifier from a network through each of the plurality of interfaces, and determine, based on the domain identifier in the network information received, whether two or more of the plurality of interfaces are attached to the same domain; and
means for deciding to allocate the same address to the two or more interfaces attached to the same domain when determining the attachment to the same domain, and requesting each proxy node connected to each of the two or more interfaces to bind the same address to each link identifier of the two or more interfaces,
wherein the proxy node performs binding based on the request and forwards, to the mobile node, a packet destined to the same address of the mobile node.

Further, in order to attain the above object, the present invention provides a proxy node in an address allocation system for allocating an address to each of a plurality of interfaces of a mobile node, the proxy node comprising:
means for binding the same address, allocated to two or more of the plurality of interfaces, to each link identifier of the two or more interfaces based on a request from the mobile node; and
means for forwarding s packet, destined to the same address of the mobile node, to the mobile node through a link corresponding to the link identifier bound.

The structure may be such that the mobile node sends an address allocation server an allocation request for the same address, and the address allocation server allocates the same address based on the allocation request.

According to this structure, the same address is allocated to two or more interfaces of the mobile node attached to the same domain, and each proxy node connected to each of the two or more interfaces binds the same address to each link identifier of the two or more interfaces. Therefore, when the mobile node has the two or more interfaces, the forwarding address of a packet destined for the mobile node in a local mobility domain is so switched that the packet can be forwarded to the mobile node.

Further, in order to attain the above object, the present invention provides an address allocation method for allocating an address to each of a plurality of interfaces of a mobile node, the method comprising:
a step of allocating a different address to each of the plurality of interfaces of the mobile node;
a step where the mobile node receives network information including a domain identifier from a network through each of the plurality of interfaces, and determines, based on the domain identifier in the network information received, whether two or more of the plurality of interfaces are attached to the same domain;
a step where the mobile node decides to use any of the two or more interfaces attached to the same domain as a backup for another interface or as backups for each other when the mobile node determines the attachment to the same domain, and requests each proxy node connected to each of the two or more interfaces to bind the address allocated to each of the two or more interfaces to a link identifier as the backup interface; and
a step where the proxy node performs binding based on the request and forwards, to the backup interface of the mobile node, a packet destined to the address of the mobile node.

Further, in order to attain the above object, the present invention provides an address allocation system for allocating an address to each of a plurality of interfaces of a mobile node, the system comprising:
means for allocating a different address to each of the plurality of interfaces of the mobile node;
means for causing the mobile node to receive network information including a domain identifier from a network through each of the plurality of interfaces, and determine, based on the domain identifier in the network information received, whether two or more of the plurality of interfaces are attached to the same domain;
means for causing the mobile node to decide to use any of the two or more interfaces attached to the same domain as a backup for another interface or as backups for each other when the mobile node determines the attachment to the same domain, and request each proxy node connected to each of the two or more interfaces to bind the address allocated to each of the two or more interfaces to a link identifier as a backup interface; and
causing the proxy node to perform binding based on the request and forward, to the backup interface of the mobile node, a packet destined to the address of the mobile node.

Further, in order to attain the above object, the present invention provides a mobile node in an address allocation system for allocating an address to each of a plurality of interfaces of the mobile node, the mobile comprising:
means for allocating a different address to each of the plurality of interfaces of the mobile node;
means for receiving network information including a domain identifier from a network through each of the plurality of interfaces, and determine, based on the domain identifier in the network information received, whether two or more of the plurality of interfaces are attached to the same domain; and
means for deciding to use any of the two or more interfaces attached to the same domain as a backup for another interface or as backups for each other when determining the attachment to the same domain, and requesting each proxy node connected to each of the two or more interfaces to bind the address allocated to each of the two or more interfaces to a link identifier as a backup interface,
wherein the proxy node performs binding based on the request and forwards, to the backup interface of the mobile node, a packet destined to the address of the mobile node.

Further, in order to attain the above object, the present invention provides a proxy node in an address allocation system for allocating an address to each of a plurality of interfaces of a mobile node, the proxy node comprising:
means for binding a different address, allocated to each of the plurality of interfaces, to each link identifier of the plurality of interfaces based on a request from the mobile node;
means for binding the address, allocated to each of the plurality of interfaces, to a link identifier as a backup interface based on the request from the mobile node, so that any of the two or more interfaces attached to the same domain will be a backup for another interface or as backups for each other; and
means for forwarding a packet, destined to the address of the mobile node, to the backup interface of the mobile node based on the binding.

The structure may be such that the proxy node performs binding based on the request, determines whether the different two or more addresses are generated with the same home network prefix, and binds the same home network prefix to the link identifier in common if generated with the home network prefix.

According to this structure, different addresses are allocated to the two or more interfaces of the mobile node attached to the same domain, and each proxy node connected to each of the two or more interfaces binds the address of an interface to each link identifier of the other interfaces as a backup. Therefore, when the mobile node has a plurality of interfaces, the forwarding address of a packet destined for the mobile node in a local mobility domain is so switched that the packet can be forwarded to the mobile node.

According to the present invention, when a mobile node has a plurality of interfaces, the forwarding address of a packet destined for the mobile node in a local mobility domain is so switched that the packet can be forwarded to the mobile node.

### BRIEF DESCRIPTION OF THE DRAWINGS

[FIG. 1] A block diagram showing a first embodiment of a communication system according to the present invention.
[FIG. 2] An explanatory diagram showing a format of network information received when a mobile node in FIG. 1 is located in a local mobility domain.
[FIG. 3] An explanatory diagram showing a communication sequence of the first embodiment.
[FIG. 4A] An explanatory diagram of a neighbor cache entry (NCE) held by a mobile access gateway (MAG) of the first embodiment, showing an NCE held by a first MAG.
[FIG. 4B] An explanatory diagram of the neighbor cache entry (NCE) held by the mobile access gateway (MAG) of the first embodiment, showing an NCE held by a second MAG.
[FIG. 5] An explanatory diagram showing a binding cache entry (BCE) held by a local mobility anchor (LMA) of the first embodiment.
[FIG. 6] A flowchart showing processing performed by the mobile node of the first embodiment.
[FIG. 7] A block diagram showing a second embodiment of the communication system according to the present invention.
[FIG. 8] An explanatory diagram showing a format of an IP address request message in the second embodiment.
[FIG. 9] A flowchart showing IP address allocation determining processing performed by an IP address allocation server in the second embodiment.
[FIG. 10A] An explanatory diagram of a neighbor cache entry (NCE) held by a mobile access gateway (MAG) of a third embodiment, showing an NCE held by a first MAG.
[FIG. 10B] An explanatory diagram of the neighbor cache entry (NCE) held by the mobile access gateway (MAG) of the third embodiment, showing an NCE held by a second MAG.
[FIG. 11] An explanatory diagram showing a binding cache entry (BCE) held by a local mobility anchor (LMA) of the first embodiment.
[FIG. 12] An explanatory diagram showing a communication sequence of the third embodiment.
[FIG. 13] A flowchart showing backup IF selection processing performed by a mobile node of the third embodiment.
[FIG. 14A] An explanatory diagram of a neighbor cache entry (NCE) held by a mobile access gateway (MAG) of a fourth embodiment, showing an NCE held by a first MAG before updated.
[FIG. 14B] An explanatory diagram of the neighbor cache entry (NCE) held by the mobile access gateway (MAG) of the fourth embodiment, showing an NCE held by a second MAG before updated.
[FIG. 14C] An explanatory diagram of the neighbor cache entry (NCE) held by the mobile access gateway (MAG) of the fourth embodiment, showing an NCE held by the first MAG after updated.
[FIG. 14D] An explanatory diagram of the neighbor cache entry (NCE) held by the mobile access gateway (MAG) of the fourth embodiment, showing an NCE held by the second MAG after updated.
[FIG. 15] An explanatory diagram showing a communication sequence of the fourth embodiment.
[FIG. 16] A flowchart showing processing performed by the mobile access gateway (MAG) of the fourth embodiment.
[FIG. 17] A functional block diagram of a configuration of the mobile node of the present invention.
[FIG. 18] A functional block diagram of a configuration of the mobile access gateway (MAG) of the present invention.
[FIG. 19A] An explanatory diagram of a neighbor cache entry (NCE) held by a conventional mobile access gateway (MAG), showing an NCE held by a first MAG.
[FIG. 19B] An explanatory diagram of the neighbor cache entry (NCE) held by the conventional mobile access gateway (MAG), showing an NCE held by a second MAG.
[FIG. 20A] An explanatory diagram of a binding cache entry (BCE) held by a conventional local mobility anchor (LMA), showing a BCE generated with "binding by address".
[FIG. 20B] An explanatory diagram of the binding cache entry (BCE) held by the conventional local mobility anchor (LMA), showing a BCE generated with "binding by prefix".

### BEST MODE FOR CARRYING OUT THE INVENTION

Preferred embodiments of the present invention will now be described with reference to the accompanying drawings.

### <First Embodiment>

FIG. 1 shows a system used for network-based mobility management as a first embodiment of a communication system according to the present invention, where the MAGs 111 and 112 as proxy nodes of the MN 101 and the LMA 110 as a home agent of the MN 101 are provided along the edge of the local mobility domain 11. The MN 101 has the IFs 1010 and 1011, and the IFs 1010 and 1011 are connected to the MAGs 111 and 112, respectively. The LMA 110 establishes a connection between the MN 101 in the local mobility domain 11 and the correspondent node (CN) 120 in a foreign network as a communication partner of the MN 101.

FIG. 2 shows a format of network information 40 received when the MN 101 is located in the local mobility domain 11. The network information 40 has the fields of a packet header 401, a domain identifier (domain ID) 402, and a MAG identifier (MAG-ID) 403. The packet header 401 includes the source of a message as an IPv4 address or IPv6 address, a type field indicative of the type of message, and a message length field indicative of the length of the message.

The domain ID 402 is an identifier of the local mobility domain 11 to which the IFs 1010 and 1011 of the MN 101 are attached. It is preferred that the domain ID 402 be configured by using, but not limited to, an identifier (domain name or the like) identifying a cellular operator, a WLAN hotspot service set identifier (SSID), or a home network prefix used by the MN 101 in the local mobility domain 11. For example, the address of the LMA 110 may also be included as an LMA for managing the MN 101. The purpose of the domain ID 402 is to enable the MN 101 to know whether plural IFs 1010 and 1011 are located in the same local mobility domain 11. If the plural IFs 1010 and 1011 are located in the same local mobility domain 11, the MN 101 can determine that all the IFs 1010 and 1011 share one IP address in the local mobility domain 11.

The MAG-ID 403 presents, to the MN 101, identifiers of the MAGs 111 and 112 to which the IFs 1010 and 1011 are connected, respectively. The MAG-ID 403 is configured by using, but not limited to, MAC addresses or care-of addresses (CoAs) of the MAGs 111 and 112. When the MN 101 identifies the MAGs 111 and 112 to which the IFs 1010 and 1011 are connected, respectively, the MN 101 can notify an entity in the local mobility domain 11 which of the IFs 1010 and 1011 is connected to which of the MAGs 111 and 112. This notified entity can determine whether the MN 101 has plural IFs 1010 and 1011 located in the same local mobility domain 11. If so, only one IP address can be allocated to all the IFs 1010 and 1011.

In a preferred form of the first embodiment, the network information 40 is forwarded to the MN 101 via the MAG 111 or 112. It will be obvious to those skilled in the art that the MAGs 111 and 112 can send the network information 40 using IEEE802.11 beacon or a Router Advertisement (RA) message and a Neighbor Advertisement (NA) message. The network information 40 may also be acquired during the authentication procedure performed when being attached to the network. When obtaining the network information 40, the MN 101 detects that the plural IFs 1010 and 1011 are located in the same local mobility domain 11 by confirming that they are identical in terms of the home network prefix, the domain ID 402, and the address of the LMA so that the MN 101 can decide to share one IP address among all the IFs 1010 and 1011 in the local mobility domain 11.

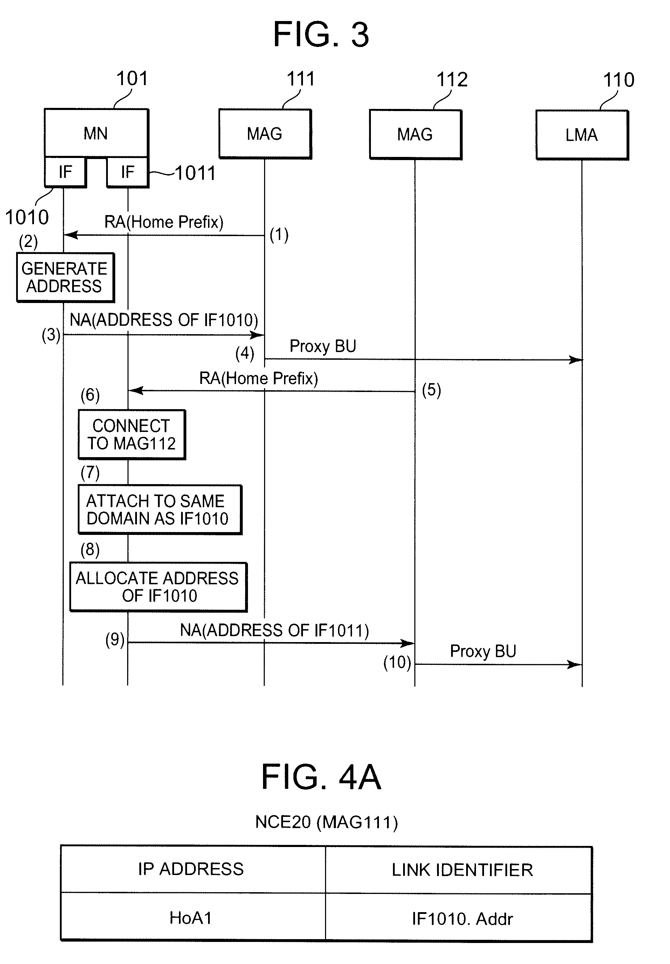

FIG. 3 shows an example of a communication sequence of the first embodiment.
(1) The first IF 1010 of the MN 101 receives, from the first MAG 111, an RA message including the home network prefix (Home Prefix) as the network information 40,
(2) the MN 101 generates an address of the first IF 1010 based on the home prefix in the RA message received.
(3) Then, when the MN 101 sends an NA (Neighbor Advertisement) message including HoA1 as the address of the first IF 1010 to the first MAG 111 from the first IF 1010,

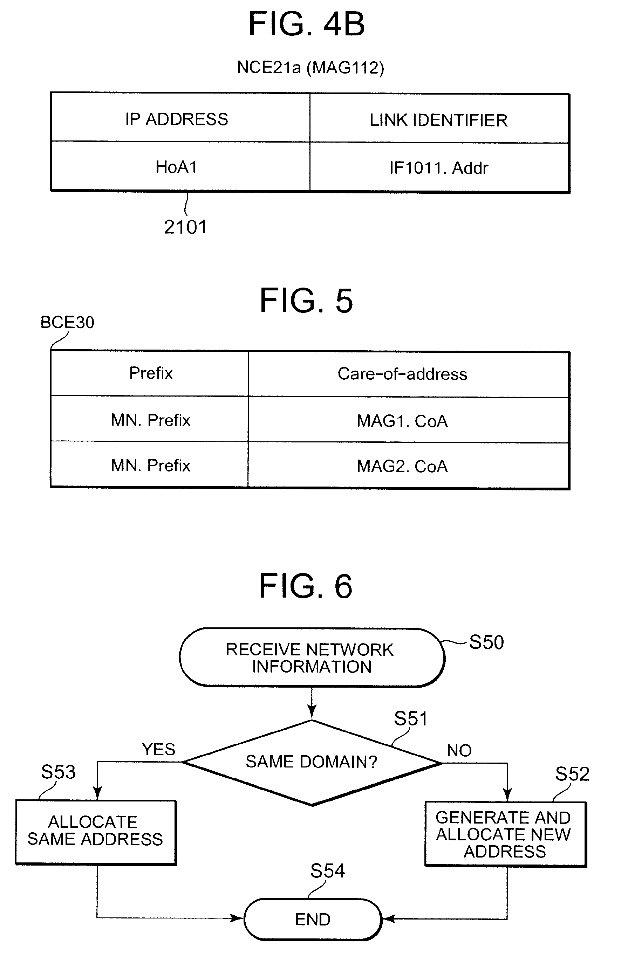

(4) the first MAG 111 binds the address HoA1 of the first IF 1010 to the first link identifier IF1010.Addr in the NCE 20 as shown in FIG. 4A, and sends the LMA 110 a proxy BU message including the home prefix of the MN 101 as a proxy of the first IF 1010 of the MN 101. When receiving the proxy BU message, the LMA 110 binds the care-of address MAG1.CoA of the first MAG 111 to home prefix MN.Prfix in the BCE 30 as shown in FIG. 5.

(5) Then, when the second IF 1011 of the MN 101 receives an RA message including the home network prefix (Home Prefix) as the network information 40 from the second MAG 112,
(6) the MN 101 establishes a connection to the second MAG 112, and
(7) then the MN 101 confirms that the home prefix included in the RA message is identical to the home prefix included in the RA message received through the first IF 1010, knowing that the second IF 1011 is attached to the same domain 11 as the first IF 1010.
(8) Then, the MN 101 allocates the address HoA1 of the first IF 1010 to the second IF 1011.
(9) Then, when the MN 101 sends an NA message including the same address HoA1 as the first IF 1010 to the second MAG 112,

(10) the second MAG 112 binds the same address HoA1 to the second link identifier IF1011.Addr in the NCE 21 as shown in FIG. 4B, and sends the LMA 110 a proxy BU message including the home prefix (MN.Prefix) of the MN 101 as a proxy of the second IF 1011 of the MN 101. When receiving the proxy BU message, the LMA 110 binds the care-of address MAG2.CoA of the second MAG 112 to the home prefix (MN.Prefix) as shown in FIG. 5. The home address may be used instead of the prefix as the target to be associated with the care-of addresses of the MAG 111 and the MAG 112.

FIG. 6 is a flowchart showing address allocation determining processing performed by the MN 101. This processing starts when the MN 101 receives the network information 40 (step S50). The reason why the processing starts when the MN 101 receives the network information 40 is because the MN 101 tries to attach the second IF to the local mobility domain 11, but it is not limited thereto. When receiving the network information 40, it is determined whether the second IF is located in the same local mobility domain 11 as the first IF (step S51). This determination can be made by comparing the domain ID 402 from the first IF with the domain ID 402 from the second IF. In step S51, if the two domain IDs 402 are different, a new IP address of the second IF is generated (step S52), and the processing is ended (step S54). On the other hand, if the two domain IDs 402 are the same in step S51, the same IP address as that of the first IF is allocated as the IP address of the second IF (step S53), and the processing is ended (step S54).

This processing will be described in detail with reference to FIG. 1. It is assumed that the first IF 1010 of the MN 101 is currently connected to the MAG 111 and is communicating in the local mobility domain 11 using HoA1. In this case, if the second IF 1011 tries to establish a connection to the MAG 112, the IF 1011 will receive the network information 40 from the MAG 112. The MN 101 checks the domain ID 402 in the network information 40 to determine whether the IF 1011 is located in the same domain 11 as the IF 1010. If the domain IDs 402 of the IFs 1010 and 1011 accord, the MN 101 assumes that the IFs 1010 and 1011 are located in the same local mobility domain 11 and allocates the same HoA1 to the IF 1011.

The technique according to the embodiment can also be employed even when the second IF 1011 of the MN 101 is attached to a network with host-based mobility management (MobilelPv6) applied thereto instead of the network-based mobility management. Processing in this case will be described. The following description uses an AR (Access Router) 112 as the destination of the IF 1011 instead of the MAG 112. It is assumed that the first IF 1010 of the MN 101 is currently connected to the MAG 111 and is communicating using HoA1. In this case, if the second IF 1011 tries to establish a connection to the AR 112, the IF 1011 will receive the network information 40 from the AR 112. The MN 101 checks the domain ID 402 in the network information 40 to determine whether the IF 1011 is located in the same domain 11 as the IF 1010. If the domain IDs 402 of the IFs 1010 and 1011 accord, the MN 101 interprets the IFs 1010 and 1011 as being attached to the same domain, and uses the same HoA1 as the IF 1010 on the IF 1011. It may also be determined that the prefix configuring HoA1 can be used on the IF 1011. As a result, another address generated from the prefix may be used on the IF 1011 instead of HoA1 itself.

### <Second Embodiment>

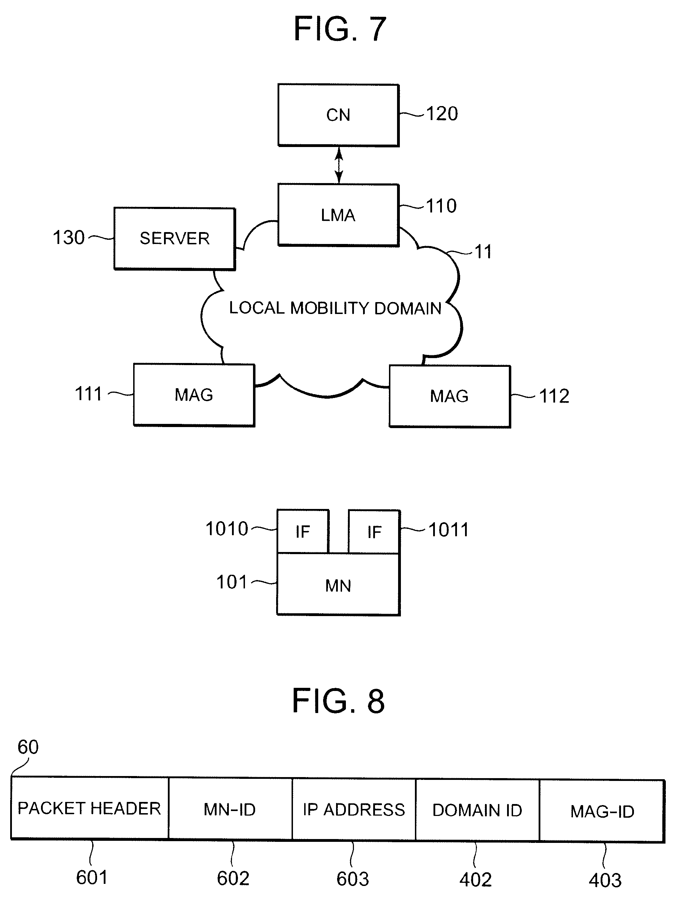

Referring next to FIG. 7 to FIG. 9, a second embodiment will be described. As another method of allocating the same IP address to the IFs 1010 and 1011 located in the same local mobility domain 11, an entity in the local mobility domain 11 performs allocation in the second embodiment. As one entity, there is a DHCP server running DHCP (Dynamic Host Configuration Protocol). In FIG. 7, when an IF of the MN 101 is attached to the local mobility domain 11, the MN 101 implements the DHCP to request the DHCP server as an IP address allocation server 130 to allocate the IP address of the IF.

FIG. 8 shows a format of an IP address request message 60 to be sent from the MN 101 to the IP address allocation server 130. The IP address request message 60 includes the fields of a packet header 601, a mobile node identifier (MN-ID) 602, an IP address 603, a domain identifier (domain ID) 402, and a MAG identifier (MAG-ID) 403. The packet header 601 includes the source of a message as an IPv4 address or IPv6 address, a type field indicative of the type of message, and a message length field indicative of the length of the message.

The MN-ID 602 includes an identifier of the MN 101, and is typically used to be associated with a policy profile of the MN 101. This policy profile can be acquired from a local server, not shown, to include the provisioned network-based mobility service characteristics and other related parameters, such as the home network prefix allocated to the MN 101, permitted address configuration modes, roaming policy, and other parameters that are essential for providing network-based mobility service. The purpose of the MN-ID 602 is to enable the IP address allocation server 130 to derive information on the MN 101 and use the information in order to determine how to allocate an IP address to the MN 101.

In a preferred form of the second embodiment, the policy profile of the MN 101 further includes interface identifiers (IF-ID) to identify each of the IFs 1010 and 1011. This IF-ID enables the IP address allocation server 130 to know which IP address has been allocated to which IF of the MN 101. It also helps the IP address allocation server 130 with billing and tracking of the IP address used by the MN 101.

The IP address field 603 in the IP address request message 60 is optional and is used by the MN 101 to specify a certain IP address in order to request the IP address allocation server 130. This request is made when the MN 101 uses the same IP address for the plural IFs 1010 and 1011. In this case, the MN 101 uses the IP address 603 to request an IP address to be allocated to a new IF. As another preferred method, the IP address 603 is used as a flag in the IP address request message 60. In other words, if this flag is set (bit=1), it means that the MN 101 is requesting an IP address currently used by another IF. Similarly, if this flag is not set (bit=0), it means that the MN 101 is requesting a new IP address. In this case, an IP address specified by the MN 101 may be included together with the flag.

The name of the local mobility domain 11 to which the IFs 1010 and 1011 of the MN 101 are attached is described in the domain ID 402. The purpose of the domain ID 402 is to allow the IP address allocation server 130 to check whether an IF and another IF of the MN 101 are located in the same local mobility domain 11. If so, the IP address allocation server 130 agrees with the MN 101 on the request so that the same IP address can be allocated to the IFs.

The MAG-ID 403 is used by the MN 101 to notify the IP address allocation server 130 of the MAGs 111 and 112 connected. The MAG-ID 403 enables the IP address allocation server 130 to inquire of the MAGs 111 and 112 whether to support the home network prefix of the MN 101. If it is supported, the IP address allocation server agrees with the MN 101 on the request so that the same IP address can be allocated to the IFs. Referring to the format of the IP address request message 60, it is described above how the IP address allocation server 130 can allocate the same IP address to the plural IFs 1010 and 1011 of the MN 101.

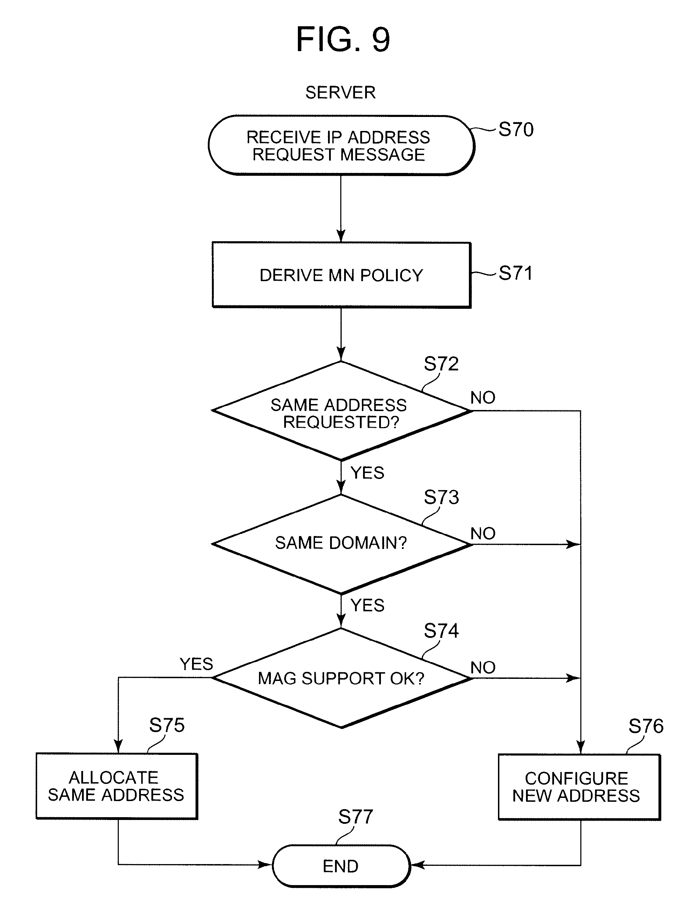

FIG. 9 is a flowchart showing address allocation determining processing performed by the IP address allocation server 130. The processing shown in FIG. 9 starts when the IP address allocation server 130 receives the IP address request message 60 (step S70) to derive the policy profile related to the MN-ID 602 in the IP address request message 60 (step S71). Then, based on this policy profile, it is determined whether the MN 101 is requesting one IP address to be allocated to the plural IFs (step S72). If YES, it is checked whether the notified IP address can be allocated, as a valid address in the local mobility domain 11, to the IFs for which the allocation of the IP address is requested (step S73). If the IP address can be allocated to the IFs requested, the IP address allocation server 130 further checks whether the MAGs 111 and 112 can support this address allocation request (step S74). If all checks are OK, the IP address is allocated to the IFs requested (step S75).

If the MN 101 is not requesting one IP address to be allocated to the plural IFs (NO in step S72), the IP address allocation server 130 configures new IP addresses for the IFs requested (step S76). Similarly, if it is determined that the notified IP address cannot be allocated, as a valid address in the local mobility domain 11, to the Ifs requested (NO in step S73), the IP address allocation server 130 configures new IP addresses to the IFs requested (step S76). If the MAGs 111 and 112 cannot support this address allocation request (No in step S74), the IP address allocation server 130 also configures new IP addresses to the IFs requested (step S76). Then, the IP address allocation server 130 notifies the IP address to the MN 101 and ends this processing (step S77).

This IP address can be notified in such a manner that the IP address allocation server 130 sends a DHCP response message including the IP address to be allocated. The advantage of using this method is that the address can be allocated on the network side. This enables the cellular operator to control the MN 101 when the IP address is shared among the plural IFs 1010 and 1011.

This method will be described in detail below. In FIG. 7, it is assumed that the local mobility domain 11 further has a DHCP server 130 as the IP address allocation server 130 with which the MN 101 communicates to get the IP address. It is also assumed that the first IF 1010 is currently connected to the first MAG 111 and allocated HoA1 by the DHCP server 130 to perform communication in the local mobility domain 11. Then, the second IF 1011 sends a DHCP request message to the DHCP server 130 to make a request for the same HoA1 as the first IF 1010, trying to establish a connection to the second MAG 112. This DHCP request message is similar to the IP address request message 60. When receiving this DHCP request message, the DHCP server 130 checks whether the same HoA1 can be allocated to the second IF 1011. Here, the DHCP server 130 determines that the second IF 1011 can use the same HoA1, and sends a DHCP response message to make a notification that the second IF 1011 uses HoA1.

As another preferred form of the second embodiment, the IP address request message 60 is sent from the MAGs 111 and 112 to the IP address allocation server 130 on behalf of the MN 101. The MAGs 111 and 112 comes to know that the MN 101 wants to allocate one IP address to all the IFs 1010 and 1011. This can be done in such a manner that the MN 101 notifies the MAGs 111 and 112 of the request or the MAGs 111 and 112 determine the address preference of the MN 101 using the policy profile of the MN 101.

The advantage of sending the IP address request message 60 from the MAGs 111 and 112 to the IP address allocation server 130 is that the MN 101 is freed from signaling to acquire the IP address. Such signaling reduces processing performed by the MN 101 having limited processing resources. Another advantage is that when the MAGs 111 and 112 can support the address allocation request, the IP address allocation server 130 does not need to inquire it from the MAGs 111 and 112. In other words, the IP address request message 60 comes from the MAGs 111 and 112, and this means to the IP address allocation server 130 that the MAGs 111 and 112 can support the address allocation request.

This method will be described in detail below. In FIG. 7, it is assumed that the local mobility domain 11 further has a DHCP server (hereinafter represented by 130) as the IP address allocation server 130 with which the MAGs 111 and 112 communicate to get the IP address of the MN 101. It is also assumed that the first IF 1010 is currently connected to the first MAG 111 and allocated HoA1 by the DHCP server 130 to enable the first IF 1010 to perform communication in the local mobility domain 11. Then, the second IF 1011 sends the second MAG 112 a request message indicating that the second IF 1011 wants to use the same HoA1, trying to establish a connection to the second MAG 112. The time at which the MN 101 sends this request message is after the MN 101 comes to know from the received network information 40 that both of the IFs 1010 and 1011 are located in the local mobility domain 11.

The second MAG 112 sends a DHCP request message to the DHCP server 130 to request the same HoA1. This DHCP request message is similar to the IP address request message 60. When receiving this DHCP request message, the DHCP server 130 checks whether the same HoA1 can be allocated to the second IF 1011. Here, the DHCP server 130 determines that the second IF 1011 can use the same HoA1, and sends a DHCP response message to the second MAG 112 to make a notification that the second IF 1011 uses HoA1. Then, this information is forwarded from the second MAG 112 to the second IF 1011.

### <Cache in First and Second Embodiments>

Upon completion of address allocation, the MN 101 advertises that the second IF 1011 is available. As shown in FIG. 3 (9), this advertisement can be performed in such a manner that the second IF 1011 sends a Neighbor Advertisement (NA) message to advertise the same IP address (HoA1) and the second link identifier IF1011.Addr. When receiving this NA message, the second MAG 112 generates a routing entry 2101 of the second IF 1011 in its Neighbor Cache Entry (NCE) 21 a as shown in FIG. 4B. The routing entry 2101 in the NCE 21 a is HoA1. This enables the second MAG 112 to forward packets, destined to HoA1, to the MN 101 via the link of the second link identifier IF1011.Addr.

After associating the second IF 1011 with the second MAG 112, the second MAG 112 sends a PBU message to the LMA 110 as shown in FIG. 3 (10) to bind HoA1 (or the home network prefix (MN.Prefix)) to the care-of address (MAG2.CoA) of the MAG 112 as shown in FIG. 5. As a result, the MN 101 has only one IP address (HoA1) for all of its IFs 1010 and 1011 in the local mobility domain 11. The advantage of using only one IP address is that all the entities (MAGs 111 and 112, and LMA 110) associate the MN 101 with only the one IP address (HoA1) in the local mobility domain 11. Thus, all the MAGs 111 and 112 have valid routing paths to the HoA1 of the MN 101 in the NCEs 20 and 21 a, respectively. This implies that the LMA 110 can also forward packets destined for the MN 101 to any of the MAGs 111 and 112 associated with the MN 101 without having to be concerned about being filtered by the MAGs 111 and 112.

In other preferred forms of the first and second embodiments, the LMA 110 can send an inquiry to the first MAG 111 before receiving the PBU message from the second MAG 112. This inquiry method can be performed by using, but not limited to, an Internet Control Messaging Protocol (ICMP). The purpose of this inquiry is to enable the LMA 110 to know whether the MN 101 is about to undertake "simultaneous connections" in the local mobility domain 11. If so, the LMA 110 can know that the MN 101 can perform routing through both the MAGs 111 and 112. Further, according to the first and second embodiments, when the MN 101 uses only one IP address for all the IFs 1010 and 1011, the LMA 110 can select through which of the MAGs 111 and 112 the packet destined for the MN 101 is routed.

### <Differences (1), (2), and (3) from Conventional Technique>

(1) Here, it will be obvious to those skilled in the art that the method of using only one IP address for all the IFs 1010 and 1011 of the MN 101 is different from that described in Patent Document 1. Patent Document 1 teaches that all IFs of the MN always use only one IP address. However, this method disables the MN to "select" use of only one IP address. On the other hand, in the present invention, it can "select" use of only one IP address for all the IFs 1010 and 1011 of the MN 101. This can be achieved through the network information 40. Thus, there is a difference between the first and second embodiments and Patent Document 1.

(2) Further, it will be obvious to those skilled in the art that the method of using only one IP address for all the IFs 1010 and 1011 of the MN 101 is different from that described in Patent Document 2. In Patent Document 2, a router determines, based only on the router itself, whether to allocate addresses to plural IFs of a mobile node. Thus, the router acts as an intelligent network switch to determine which address is allocated to which IF. On the other hand, in the present invention, the MN 101 needs to receive, from the network, information for determining which IP address is allocated to which IF, but this can be achieved through the network information 40. Thus, there is a difference between the first and second embodiments and Patent Document 2.

(3) Finally, it will be obvious to those skilled in the art that the method of using only one IP address for all the IFs 1010 and 1011 of the MN 101 is different from that described in Patent Document 3. In Patent Document 3, it is known, using trigger signals, that plural IFs are located on the same link. Therefore, the plural IFs act as backup IFs for one another. In the present invention, the network information 40 is introduced to prevent such trigger signals from overflowing in the local mobility domain 11. However, the network information 40 of the first and second embodiments is sent by the MAGs 111 and 112 to enable the MN 101 to know that its plural IFs 1010 and 1011 are located on the same link. According to this operation, the network information 40 is sent only in the network controlled by the MAGs 111 and 112, so that the network information 40 can be prevented from overflowing in the local mobility domain 11. Thus, there is a difference between the first and second embodiments and Patent Document 3.

### <Other Usage Patterns of First and Second Embodiments>

The plural IFs 1010 and 1011 of the MN 101 can also be connected to the same MAG. In FIG. 1, it is assumed that both of the IFs 1010 and 1011 are connected to the MAG 111 in the local mobility domain 11. Here, it is assumed that the MN 101 has an IEEE802.11 wireless IF as the first IF 1010 and an IEEE802.3 wired IF as the second IF 1011, and the MAG 111 serves as an access point that supports both the IEEE802.11 and IEEE802.3 access techniques. Thus, the MN 101 can connect both of the IFs 1010 and 1011 to the MAG 111. In this case, the MN 101 can allocate only one IP address to the IFs 1010 and 1011. The advantage of allocating only this one IP address is that a task that involves handling plural addresses can be removed from the MN 101.

In this usage pattern, the MN 101 knows that both of the IFs 1010 and 1011 are connected to the MAG 111. As one of methods by which the MN 101 knows this, there is a method in which the MN 101 compares MAG-IDs 403 in the network information 40 to find that both are the same, but the method is not limited thereto. Thus, the MN 101 can select which link identifier is associated with the IP address. As one of methods in which this MN 101 selects a link identifier, there is a method in which the MN 101 selects it according to the flow type received, but the method is not limited thereto.

Since a link identifier to be associated with the IP address is selected, the MAG 111 has only to store one route entry of the MN 101 in the NCE 20. For example, when receiving a video stream via the first HoA1, the MN 101 selects the route of the second IEEE802.3 wired IF 1011. At this time, the MN 101 instructs the second IF 1011 to advertise (e.g., using an NA message) that the first HoA1 is available under the second link identifier IF1011.Addr. This enables the MAG 111 to update the NCE 20 to reflect that packets destined to the first HoA1 are forwarded to the MN 101 via the second link identifier IF1011.Addr.

After receiving the video stream, if the MN 101 decides to download an e-mail using the first HoA1 via the first IEEE802.11 wireless IF 1010, the MN 101 will instruct the first IF 1010 to advertise (e.g., using an NA message) that the first HoA1 is available under the first link identifier IF1010.Addr. This enables the MAG 111 to update the NCE 20 to reflect that packets destined to the first HoA1 are forwarded to the MN 101 via the first link identifier IF1010.Addr.

### <Third Embodiment>

In the above description, the method of using only one IP address for all the IFs 1010 and 1011 of the MN 101 in the local mobility domain 11 is to enable the MAGs 111 and 112 to switch the forwarding destination for the MN 101. However, even if the MN 101 uses a different IP address for each of the IFs 1010 and 1011, one is set as a backup IF for the other, or both are set as backup IFs for each other to bind each other, enabling the LMA 110 to switch the forwarding destination for the MN 101.

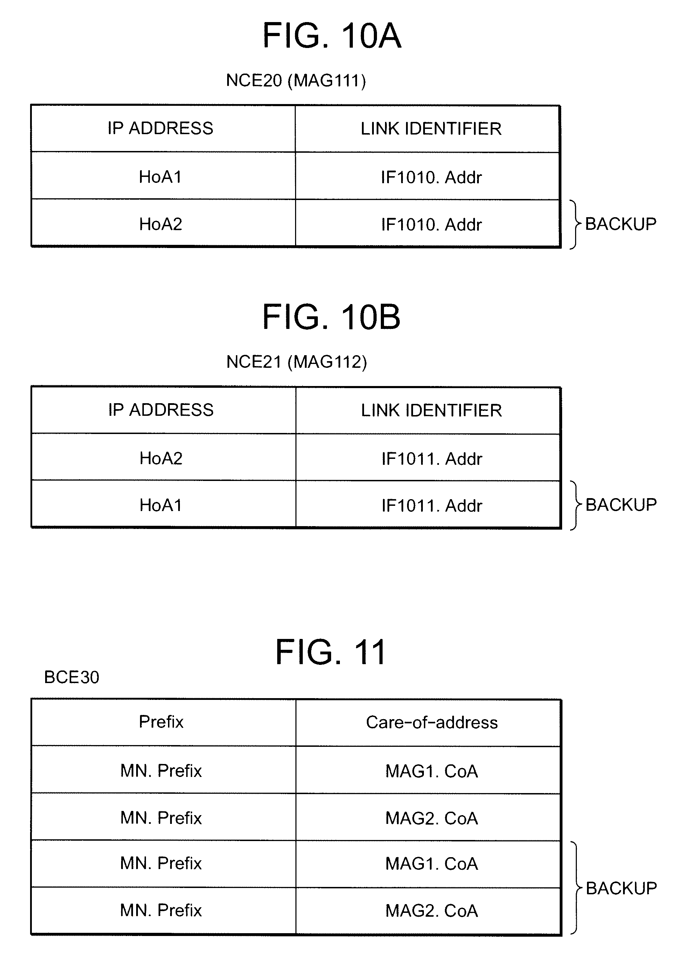

In the third embodiment, the MN 101 determines in FIG. 1 whether all the IFs 1010 and 1011 are located in the same local mobility domain 11, and if located, the MN 101 notifies the MAGs 111 and 112 that plural IP addresses are used. In other words, the MN 101 allocates, to each interface, an address allocated to another interface connected to another MAG in the same domain, and notifies the MAG connected to each interface not only of the address allocated to the interface connected, but also of an address allocated to another interface connected to another MAG in the same domain. Upon receipt of this notification, the MAGs 111 and 112 update the NCEs 20 and 21 based on an additional IP address advertised by the MN 101 so that the IFs 1010 and 1011 will become backup IFs for each other as shown in FIG. 10A and FIG. 10B. Further, the LMA 110 updates the BCE 30 according to the proxy BU messages from the MAGs 111 and 112 for setting the backup IFs so that the IFs 1010 and 1011 will become backup IFs for each other as shown in FIG. 11.

In the third embodiment, when the MN 101 uses a different one IP address for each individual IF 1010 or 1011 in the same local mobility domain 11, respectively, the LMA 110 can instruct the MAGs 111 and 112 to set up the NCEs 20 and 21, respectively, so that packets for the MN 101 can be routed in the local mobility domain 11. For example, the LMA 110 requests the first MAG 111 to generate a second entry in order to bind HoA2 of the second IF 1011 to the link identifier IF1010.Addr of the first IF 1010 in the NCE 20 shown in FIG. 10A. Further, the MAG 111 instructs the MN 101 to allocate HoA2 to the IF 1010. On the other hand, the LMA 110 request the second MAG 112 to generate a second entry in order to bind HoA1 of the first IF 1010 to the link identifier IF1011.Addr of the second IF 1011 in the NCE 21 shown in FIG. 10B. Further, the MAG 112 instructs the MN 101 to allocate HoA1 to the IF 1011. The MAGs can instruct the address allocation using DHCPs. Thus, based on the NCEs 20 and 21 updated as shown in FIG. 10A and FIG. 10B, respectively, the LMA 110 can select which of the MAGs 111 and 112 to pass through regardless of whether the destination of a packet is HoA1 or HoA2 of the MN 101.

As another preferred form of the third embodiment, the LMA 110 may instruct the MN 101 to update the NCEs 20 and 21 of the MAGs 111 and 112. In this case, the LMA 110 instructs the MN 101 to update the NCE 20 of the MAG 111 with the IP address of the IF 1011, and to update the NCE 21 of the MAG 112 with the IP address of the IF 1010. Thus, according to this operation, the NCEs 20 and 21 of the MAGs 111 and 112 can be updated with new routing entries for the MN 101.

For example, when the MN 101 receives, from the LMA 110, a request for updating the entry of the first MAG 111 with the IP address HoA2 of the second IF 1011, the MN 101 uses an NA message, for example, to advertise that the second HoA2 is available for the first MAG 111. This advertisement causes the first MAG 111 to generate a second entry in order to bind the IP address HoA2 of the second IF 1011 to the link identifier IF 1010.Addr of the first IF 1010 in the NCE 20.

Similarly, when the MN 101 receives, from the LMA 110, a request for updating the entry of the second MAG 112 with the first IP address HoA1, the MN 101 uses an NA message, for example, to advertise that the first IP address HoA1 is available for the second MAG 112. This advertisement causes the second MAG 112 to generate a second entry in order to bind IP address HoA1 of the first IF 1010 to the link identifier IF1011.Addr of the second IF 1011 in the NCE 21. Thus, the updated NCEs 20 and 21 enable the LMA 110 to select which of the MAGs 111 and 112 to pass through regardless of whether it is any of packets destined to the MN 101.

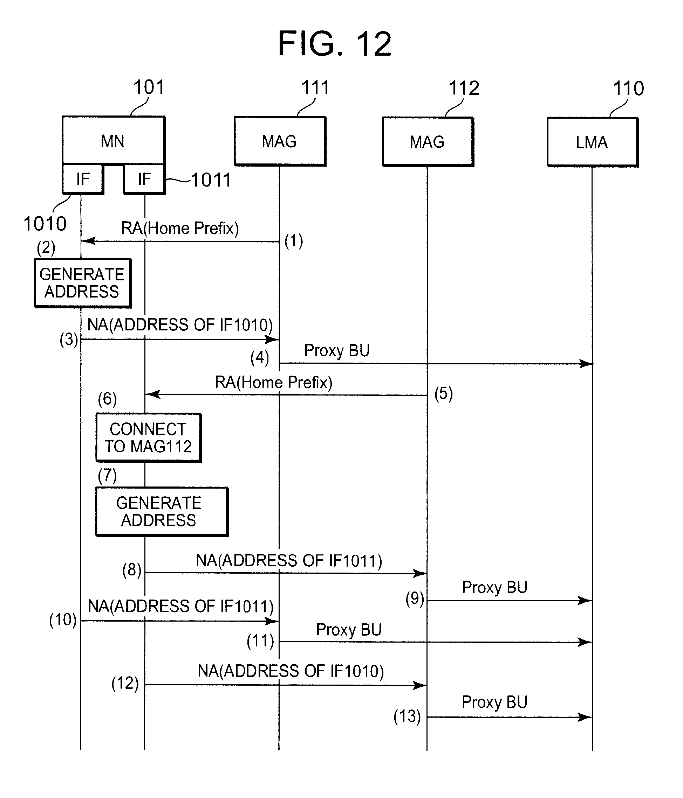

FIG. 12 shows an example of a communication sequence of the third embodiment. In FIG. 12,
(1) when the first IF 1010 of the MN 101 receives, from the first MAG 111, an RA message including the home prefix as the network information 40,
(2) the MN 101 generates the address HoA1 of the first IF 1010 based on the home prefix in the RA message received.
(3) Then, when the MN 101 sends an NA message including the address HoA1 of the first IF 1010 from the first IF 1010 to the first MAG 111,
(4) the first MAG 111 performs binding as described with reference to FIG. 10A, and sends the LMA 110 a proxy BU message including the home prefix being advertised to the IF 1010 as a proxy of the first IF 1010 of the MN 101. When receiving the proxy BU message, the LMA 110 binds the care-of address MAG1.CoA of the MAG 111 to the home prefix being advertised to the IF 1010 of the MN 101 as shown in FIG. 11.

(5) Then, when the second IF 1011 of the MN 101 receives an RA message including the home prefix as the network information 40 from the second MAG 112,
(6) the MN 101 establishes a connection to the second MAG 112, and
(7) the MN 101 generates the address HoA2 of the second IF 1011 based on the home prefix in the RA message received from the second MAG 112.
(8) Then, when the MN 101 sends the second MAG 112 an NA message including the address HoA2 of the second IF 1011,
(9) the second MAG 112 performs binding as described with reference to FIG. 10B, and sends the LMA 110 a proxy BU message including the home prefix being advertised to second IF 1011 as a proxy of the second IF 1011 of the MN 101. When receiving the proxy BU message, the LMA 110 binds the care-of address MAG2.CoA of the MAG 112 to the home prefix being advertised to the IF 1011 of the MN 101 as shown in FIG. 11.

(10) Then, the MN 101 requests the first MAG 111 from the first IF 1010 to bind the address HoA2 of the second IF 1011 to the link identifier IF1010.Addr of the first IF 1010 for backup as described with reference to FIG. 10A. Note that the MN 101 may notify the MAG 111 of the home prefix being advertised to the IF 1011 together with the HoA2.
(11) When receiving this request, the first MAG 111 binds HoA2 to the link identifier IF1010.Addr of the IF 1010 according to the request. Note that, if the prefix of HoA2 is different from the home prefix being advertised to the IF 1010, i.e., if the home prefix being advertised to the IF 1010 is different from the home prefix being advertised to the IF 1011, a proxy BU message including the home prefix being advertised to the IF 1011 is sent to the LMA 110 as a proxy of the second IF 1011 of the MN 101. The LMA 110 binds the care-of address MAG1.CoA of the first MAG 111 to the home prefix being advertised to the second IF 1011 as shown in FIG. 11.

(12) Further, the MN 101 allocates the address HoA1 of the IF 1010 to the IF 1011, and requests the second MAG 112 from the second IF 1011 to bind the address HoA1 of the first IF 1010 to the link identifier IF1011.Addr of the second IF 1011 for backup as described with reference to FIG. 10B. Note that the MN 101 may notify the MAG 112 of the home prefix being advertised to the IF 1010 together with the HoA1.
(13) When receiving this request, the second MAG 112 binds HoA1 to the link identifier IF1011.Addr of the IF 1011 according to the request. Note that, if the prefix of HoA1 is different from the home prefix being advertised to the IF 1011, i.e., if the home prefix being advertised to the IF 1011 is different from the prefix being advertised to the IF 1010, a proxy BU message including the home prefix being advertised to the IF 1010 as a proxy of the first IF 1010 of the MN 101 is sent to the LMA 110. The LMA 110 binds the care-of address MAG2.CoA of the second MAG 112 to the home prefix being advertised to the first IF 1010 as shown in FIG. 11. In (4) and (9), when the proxy BU messages sent by the MAG 111 and the MAG 112 are messages to associate the care-of addresses of the MAGs to the home address of the MN 101 (binding by address), the respective MAG send in (11) and (13) proxy BU messages to register the care-of addresses of the MAGs for the HoA newly notified from the MN 101, respectively.

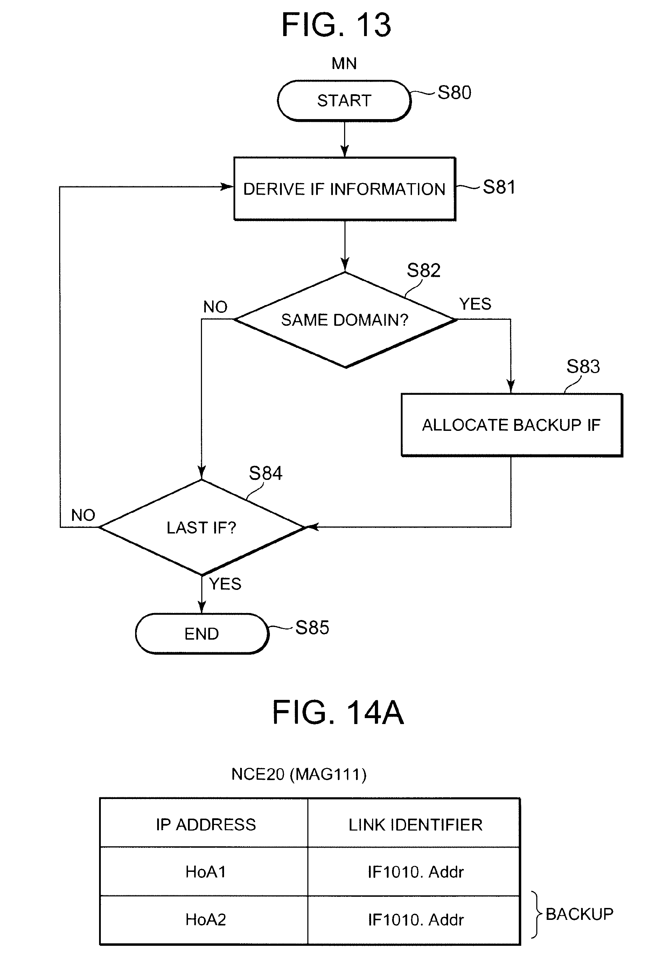

FIG. 13 is a flowchart showing backup IF selection processing performed by the MN 101 in the third embodiment. This processing starts upon starting allocation of the IFs 1010 and 1011 for backup (step S80). Here, the MN 101 decides to start allocation when the user of the MN 101 comes to know that the plural IFs 1010 and 1011 of the MN 101 are active and hence applies a trigger to the MN 101. As a result of this trigger, IF information on all the active IFs 1010 and 1011 is derived (step S81), and using this IF information, it is determined whether the plural IFs 1010 and 1011 are located in the same local mobility domain 11 (step S82).

This determination is made by comparing the network information 40 associated with the IFs 1010 and 1011, respectively, especially the domain IDs 402. If the domain IDs 402 of the IFs 1010 and 1011 are in the same position, it can be determined that the IFs 1010 and 1011 are located in the same local mobility domain 11. In this case, both of the IFs 1010 and 1011 are allocated as backups for each other (step S83), and the processing proceeds to step S84. For example, in this backup allocation processing, the MN 101 instructs the first IF 1010 to advertise the IP address HoA2 used by the second IF 1011 to the first MAG 111.

In step S84, it is checked whether any other IF remains unprocessed, and if any IF remains, the processing returns to step S81 to derive information on the IF, continuing the processing. On the other hand, if no IF remains, this processing is ended (step S85). In step S82, if it is determined that the plural IFs 1010 and 1011 are not located in the same local mobility domain 11, the processing proceeds to step S84 to check whether any other IF remains unprocessed.

The backup IF setting will be described in detail with reference to FIG. 1. It is assumed that the first IF 1010 of the MN 101 is currently connected to the first MAG 111 and is performing communication using the first address HoA1 in the local mobility domain 11. Similarly, it is assumed that the second IF 1011 is currently connected to the second MAG 112 and is performing communication using the second address HoA2 in the local mobility domain 11. The MN 101 compares the domain IDs 402 of the network information 40 based on the network information 40 received on both of the IFs 1010 and 1011. Here, since both of the domains ID 402 accord, the MN 101 determines that the IFs 1010 and 1011 are located in the same local mobility domain 11. Then, the MN 101 instructs the first IF 1010 to advertise the second address HoA2 to the first MAG 111, and the second IF 1011 to advertise the first address HoA1 to the second MAG 112. This advertisement method can be performed by using, but not limited to, a Neighbor Advertisement (NA) message.

When receiving this Neighbor Advertisement (NA) message, the MAGs 111 and 112 update NCEs 20 and 21 based on the advertised IP addresses as shown in FIG. 10A and FIG. 10B, respectively, to generate additional routing entries to the MN 101. In a preferred form of the third embodiment, the MAGs 111 and 112 add new routing entries to the NCEs 20 and 21, respectively. Referring to FIG. 10A, when receiving the NA message advertising the second address HoA2 from the first IF 1010, the first MAG 111 generates a new entry in the NCE 20 and maps the second address HoA2 as a backup IF to the first link identifier IF1010.Addr. Similarly, referring to FIG. 10B, when receiving the NA message advertising the first address HoA1 from the second IF 1011, the second MAG 112 generates a new entry in the NCE 21 and maps the first address HoA1 as a backup IF to the second link identifier IF1011.Addr.

The advantage of this backup IF setting is that the LMA 110 can forwards packets destined for the MN 101 to the MAGs 111 and 112 without having to be concerned about such a state that the packets destined for the MN 101 are filtered by the MAGs 111 and 112 because of invalid routing paths. For example, in FIG. 1, when the LMA 110 forwards packets, destined to the second address HoA2, to the MN 101 via the first MAG 111, since the NCE 20 of the first MAG 111 has the valid routing path to the second address HoA2, the first MAG 111 forwards the packets, destined to the second address HoA2, to the MN 101 via the first link identifier IF1010.Addr.

The technique according to the embodiment can also be employed even when the second IF 1011 of the MN 101 is attached to a network with host-based mobility management (MobilelPv6) applied thereto instead of the network-based mobility management. In other words, if it is found that both connected networks are in the same domain while the IF 1011 is using the second address HoA2 in MobilelPv6, the MN 101 instructs the first IF 1010 to advertise the second address HoA2 to the first MAG 111. The MN 101 also instructs the second IF 1011 to send a Binding Update (BU) message to an HA to associate the care-of address allocated to the IF 1011 with HoA1. It may also be determined that the IF 1010 uses the prefix configuring HoA2 rather than HoA2 itself.

### <Fourth Embodiment>

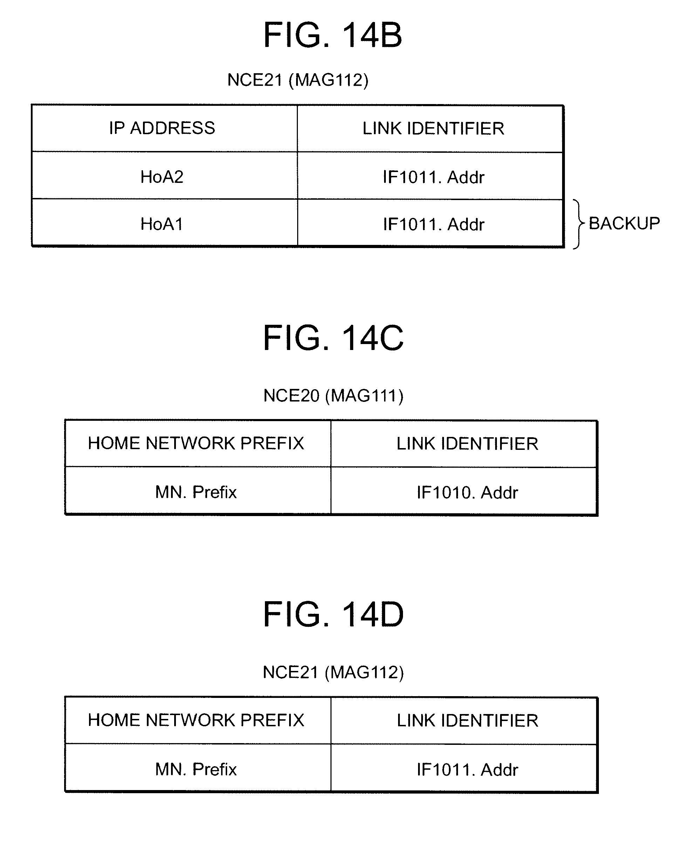

In a fourth embodiment, the MAGs 111 and 112 can bind the home network prefix (MN.Prefix) of the MN 101 to the first link identifier IF1010.Addr and the second link identifier IF1011.Addr of the MN 101 in the respective NCEs 20 and 21 as shown in FIG. 14C and FIG. 14D, respectively.

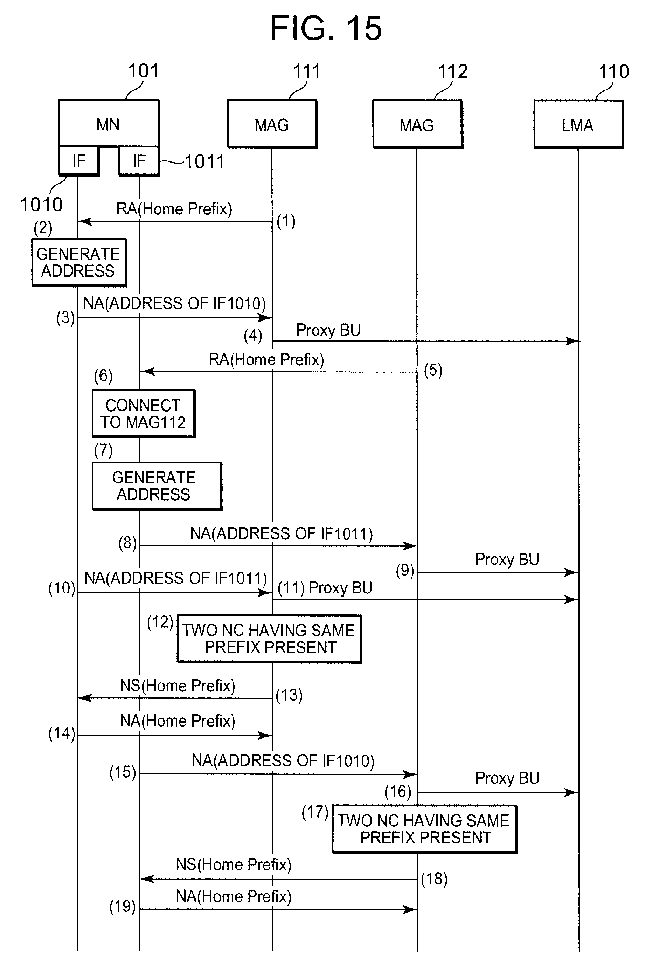

FIG. 15 shows a communication sequence of the fourth embodiment. (1) to (11) are the same as (1) to (11) in FIG. 12, where the respective addresses HoA1 and HoA2 of the IFs 1010 and 1011 are generated at the MN 101 based on each home network prefix. Further, in (3), the address HoA1 of the IF 1010 is notified from the MN 101 to the MAG 111, and in (10), the address HoA2 of the IF 1011 is notified as a backup. As a result, the addresses HoA1 and HoA2 are stored in its NCE 20 as shown in FIG. 14A.

(12) The first MAG 111 checks the NCE 20 shown in FIG. 14A, and when knowing that there are two addresses (HoA1 and HoA2) having the same home prefix,
(13) the first MAG 111 sends an NS message including the home network prefix to the first IF 1010 of the MN 101.
(14) When receiving this NS message, the MN 101 sends an NA message including the home network prefix from the first IF 1010 to the first MAG 111 to associate the home network prefix (MN.Prefix) with the first link identifier IF1010.Addr as shown in FIG. 14C. The first MAG 111 receives the NA message and performs binding as shown in FIG. 14C.

(15) Further, the MN 101 sends an NA message including the address HoA1 of the first IF 1010 from the second IF 1011 to the second MAG 112.
(16) When receiving this NA message, the second MAG 112 updates the NCE 21 to set the first address HoA1 as a backup as shown in FIG. 14B, and sends a proxy BU message to the LMA 110 on behalf of the first IF 1010.
(17) Further, the second MAG 112 checks its NCE 21, and when knowing that there are two addresses (HoA1 and HoA2) having the same home prefix,
(18) the second MAG 112 sends an NS message including the home prefix to the second IF 1011 of the MN 101.
(19) When receiving this NS message, the MN 101 sends an NA message including the home prefix from the second IF 1011 to the second MAG 112 to associate the home network prefix (MN.Prefix) of the MN 101 with the second link identifier IF1011.Addr as shown in FIG. 14D. The second MAG 111 receives the NA message and performs binding as shown in FIG. 14D.

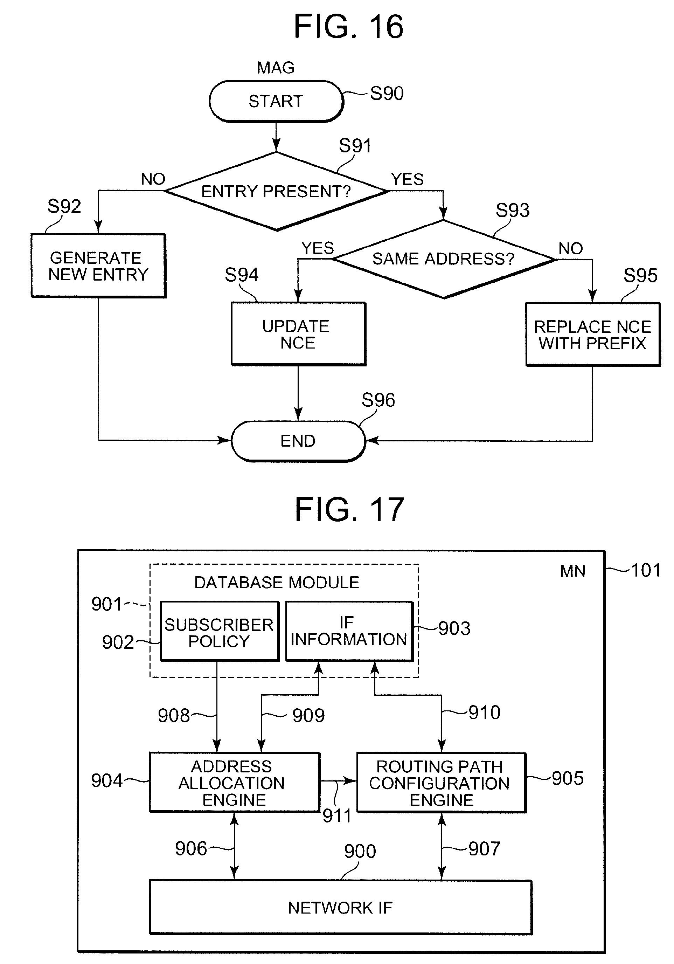

FIG. 16 is a flowchart showing processing performed by the MAGs 111 and 112 in the fourth embodiment. The processing starts at step S90 when the MAGs 111 and 112 receive, from the MN 101, an NA message for associating the IP address with a specific link identifier. Then, in step S91, it is checked whether the link identifier in the NA message received is already present in each of their NCEs 20 and 21. If not present, the entry of the link identifier is generated in each of their NCEs 20 and 21 (step S92). Since this means that an entry for associating this link identifier with the IP address is present in each of the NCEs 20 and 21 of the MAGs 111 and 112, the processing is ended (step S96).

On the other hand, in step S91, if the link identifier in the NA message received is already present in each of their NCEs 20 and 21, since it implies the presence of the link identifier to be associated with the IP address, the MAGs 111 and 112 checks whether the IP address in the NA message received is the same as the IP address in each of the NCEs 20 and 21 (step S93). If they are the same, the MAGs 111 and 112 determines that the purpose of the NA message received is to refresh the life time of the entry present in each of their NCEs 20 and 21, and updates the entry (step S94). Then, the processing is ended (step S96).

In step S93, if the IP address in the NA message received is different from the IP address in the NCE, it means that the IP address in the NA message received is associated with plural IP addresses. Therefore, the MAGs 111 and 112 replace the entry in each of the NCEs 20 and 21, shown in FIG. 14A and FIG. 14B, respectively, with such an entry that associates the link identifier in the received NA message with the home network prefix of the MN 101 (step S95). Then, the processing is ended (step S96). It is preferred that this home network prefix can be obtained from the policy profile of the MN 101 stored in each of the MAGs 111 and 112.

As an option, in step S93, if the IP address in the NA message received is different from the IP address in each of the NCEs 20 and 21, the MAGs 111 and 112 may test the IP address in each of the NCEs 20 and 21 before replacing the entry in step S95. This test is useful for the MN 101 to replace an old IP address with a new IP address. This test enables the MAGs 111 and 112 to know that the MN 101 is about to replace the old IP address with the new IP address instead of associating the plural IP addresses with specific one IF.

If possible, this test is done in such a manner that the MAGs 111 and 112 sends an NS message to each of the current IP addresses in the NCEs 20 and 21. If the MN 101 does not send an NA message in response to this NS message, this implies that the MN 101 is about to replace the old IP address with the new IP address for specific one IF. Further, if the MN 101 does not send an NA message in response to this NS message, this implies that the MN 101 is about to associate plural IP addresses with specific one IF.

The advantage of this test is that a method of allowing the MAGs 111 and 112 to test the connectivity of the MN 101 using the NS message or the NA message can be simplified. In this case, the MAGs 111 and 112 have only to send an NS message for the home network prefix of the MN 101 instead of sending an NS message for each of the IP addresses HoA1 and HoA2 of the MN 101. If the MN 101 still has active IFs associated with the MAGs 111 and 112, the MN 101 responds to this NS message with an NA message. Note that even if the IP address in the NA message received is different, information indicating that the IP address in the NA message is an address allocated to another interface may be added to avoid interpretation that the purpose is to update an existing entry.

The following describes the details. The first MAG 111 references the NCE 20 shown in FIG. 14A, and when detecting that the plural IP addresses HoA1 and HoA2 are bound to the same link identifier IF 1010.Addr, the first MAG 111 alters the NCE 20 shown in FIG. 14C to bind MN.Prefix to the first link identifier IF1010.Addr. If there is a need to test whether the first IF 1010 is still active, the first MAG 111 sends an NS message to the first link identifier IF1010.Addr as shown in FIG. 15 (13). This NS message includes MN.Prefix. The MN 101 receives this NS message through the first IF 1010, and checks whether MN.Prefix is allocated. If so, the MN 101 instructs the first IF 1010 to send back an NA message to advertise that the first IF 1010 is still active as shown in FIG. 15 (14).

### <Configuration of MN 101>

Next, a configuration of the MN 101 to implement the method of allocating an IP address to the plural IFs 1010 and 1011 of the MN 101 in the manner mentioned above will be described. FIG. 17 is a functional block diagram showing the configuration of the MN 101. The MN 101 has a network interface (IF) 900, a database module 901 storing a subscriber policy 902 and interface (IF) information 903, an address allocation engine 904, and a routing path configuration engine 905.

The network IF900 is a block having all hardware and software necessary for the MN 101 to communicate with other nodes through several communication media. Using technical terms known in the related technical field, the network IF 900 represents a communication device, firmware, a driver, and layer 1 (physical layer) and layer 2 (data link layer) communication protocols. It will be apparent to those skilled in the art that the MN 101 includes one or more network interfaces 900. A signal/data path 906 is to transfer triggers and packets between the network IF 900 and the address allocation engine 904. Similarly, a signal/data path 907 is to transfer triggers and packets between the network IF 900 and the routing path configuration engine 905.

The database module 901 stores information necessary for the MN 101. As a preferred form, the subscriber policy 902 includes all information on the user of the MN 101, such as IMSI (International Mobile Subscriber Identity) used by the cellular operator to authenticate the subscriber. Upon IP address allocation in the local mobility domain 11, the address allocation engine 904 can acquire the information on the subscriber from the subscriber policy 902 through a signal/data path 908.

The IF information 903 consists of one or plural pieces of information, including all pieces of the IF information on each of the IFs 1010 and 1011 of the MN 101. It is preferred that the IF information 903 include, but not limited to, the name of a domain to which each of the IFs 1010 and 1011 is attached, and the home network prefix allocated to each of the IFs 1010 and 1011. The address allocation engine 904 can derive or update necessary information from the IF information 903 through a signal/data path 909. Similarly, the routing path configuration engine 905 can derive or update necessary information from the IF information 903 through a signal/data path 910.

In the present invention, the MN 101 determines an IP address to be allocated to each of the IFs 1010 and 1011 with the introduction of the address allocation engine 904. The address allocation engine 904 operates with logic shown in FIG. 6 and FIG. 13 to determine whether the same IP address is allocated to the plural IFs 1010 and 1011 of the MN 101. Through a signal/data path 911, the address allocation engine 904 can instruct the routing path a configuration engine 905 to advertise a routing path in the local mobility domain 11.

Further, in the present invention, the IP address allocated to each of the IFs 1010 and 1011 of the MN 101 is advertised, as shown in FIG. 3 and FIG. 12, with the introduction of the routing path configuration engine 905. This advertisement method can be implemented using Neighbor discovery as mentioned above. This method enables an entity in the local mobility domain 11 to obtain a routing path up to the MN 101 through a specific IF.

### <Configuration of MAG>

Next, a configuration of the MAGs 111 and 112 will be described. FIG. 18 functionally shows the configuration of the MAG 111 (and 112). The MAG 111 has a network interface (IF) 11000, a database module 11001 storing a subscriber policy 11002 and a routing path cache 11003, an advertisement message configuration engine 11004, and a routing path configuration engine 11005.

The network IF 11000 is a block having all hardware and software necessary for the MAG 111 to communicate with other nodes through several communication media. Using technical terms known in the related technical field, the network IF 11000 represents a communication device, firmware, a driver, and layer 1 (physical layer) and layer 2 (data link layer) communication protocols. It will be apparent to those skilled in the art that the MAG 111 includes one or more network interfaces IF 11000. A signal/data path 11006 is to transfer triggers and packets between the network IF 11000 and the area of the subscriber policy 11002. For example, the signal/data path 11006 is used to transfer and store a policy profile of the subscriber received from a local server, not shown, to and in the area of the subscriber policy 11002.

Similarly, a signal/data path 11007 is to transfer triggers and packets between the network IF 11000 and the routing path configuration engine 11005. It is preferred that the signal/data path 11007 be used to transfer an NA message, sent from the MN 101 to this MAG 111, to the routing path configuration engine 11005.

The database module 11001 stores information necessary for the MAG 111. It is preferred that the database module 11001 holds all information on the user of the MN 101 as the subscriber policy 11002. An example of the information is the policy profile of the MN 101 including the home network prefix allocated to the MN 101. Upon generation of a router advertisement (RA) message for a specific MN 101 in the local mobility domain 11, the advertisement message configuration engine 11004 can acquire the home network prefix of the MN from the area of the subscriber policy 11002 through a signal/data path 11008.

The database module 11001 also holds one or plural routing path caches 11003. The routing path cache 11003 includes all information necessary for the MAG 111 to route packets in the local mobility domain 11. The routing path cache 11003 represents the NCE tables shown in FIG. 4A, FIG. 4B, FIG. 10A, FIG. 10B, FIG. 14A, FIG. 14B, FIG. 14C, and FIG. 14D. Since the routing information is available to the MAG 111, the MAG 111 can route packets destined for the MN 101 smoothly to an intended destination in the local mobility domain 11. Through a signal/data path 11009, appropriate routing path information can be derived or updated between the routing path cache 11003 and the routing path configuration engine 11005.

The purpose of the advertisement message configuration engine 11004 is to generate a router advertisement (RA) message periodically for each MN 101 connected to the MAG 111. It is preferred that the advertisement message configuration engine 11004 describe the domain ID in the RA message. Through a signal/data path 11010, the advertisement message configuration engine 11004 can send the RA message to each MN 101 connected the MAG 111 via the network IF 11000.

In the present invention, the MAG 111 routes packets in the local mobility domain 11 with the introduction of the routing path configuration engine 11005. As described with reference to FIG. 3 and FIG. 12, a task of the routing path configuration engine 11005 of the MAG are to generate and maintain routing entries stored in the routing path cache 11003. When the latest routing information is available at the MAG 111, the MAG 111 can route packets destined for the MN 101 smoothly to an intended destination in the local mobility domain 11.

In addition, another task of the routing path configuration engine 11005 is to determine whether the home network prefix needs to be bound to the link identifier of the MN 101. This determination method is shown in FIG. 16. This example is when the first IF 1010 of the MN 101 advertises the second IP address of the first link identifier. In this case, when the routing path configuration engine 11005 comes to know that the first IF 1010 is already associated with the first IP address in the routing path cache 11003, binding of the home network prefix of the MN 101 to the link identifier is determined. This results in updating the entry of the MN 101.

### <Modifications>

While the present invention has been described by way of preferred embodiments, the present invention can, of course, be applied to various modifications. For example, the configuration of the MN 101 shown in FIG. 17 can be provided in a mobile router. In other words, the address allocation engine 904 can be provided in an address allocation server. In this case, the address allocation engine 904 operates with logic shown in FIG. 6 to determine whether to allocate the same IP address to the plural IFs 1010 and 1011 of the MN 101.

Further, the routing path configuration engine 905 provided in the MN 101 can be provided in the MAGs 111 and 112 to help the IFs 1010 and 1011 of the MN 101 construct routing paths in the local mobility domain 11. Finally, the backup IF selection performed by the MN 101 may be made by the address allocation server 130. For example, the address allocation server 130 uses the method shown in FIG. 13 to allocate a backup IF of the MN 101. This information is useful for LMA 110 to find an alternative routing path when the current routing path to the MN 101 is unusable.

Each of the functional blocks used in describing the aforementioned embodiment of the present invention is implemented as an LSI (Large Scale Integration) typified by an integrated circuit. These may be made up of one chip individually, or they may be made up of one chip to include some or all of them. Here, although the LSI is assumed, it may be called an IC (Integrated Circuit), a system LSI, a super LSI, or an ultra LSI depending on the degree of integration. Further, the technique for creation of an integrated circuit is not limited to LSI, and it may be implemented by a dedicated circuit or a general-purpose processor. An FPGA (Field Programmable Gate Array) capable of programming after LSI manufacturing or a reconfigurable processor capable of reconfiguring connections or settings of circuit cells within the LSI may also be employed. In addition, if integrated circuit technology capable of replacing LSI emerges with the development of semiconductor technology or another technology derived therefrom, the technology may of course be used to integrate the functional blocks. For example, applications of biotechnology may be possible.

### INDUSTRIAL APPLICABILITY

The present invention has the advantage of switching the forwarding destination address of a packet destined for a mobile node in a local mobility domain when the mobile node has a plurality of interfaces so that the packet can be forwarded to the mobile node, and can be used in the proxy mobile Internet Protocol (PMIP).

## Claims

1. An address allocation method for allocating an address to each of a plurality of interfaces of a mobile node, the method comprising:
a step where the mobile node receives network information including a domain identifier from a network through each of the plurality of interfaces, and determines, based on the domain identifier in the network information received, whether two or more of the plurality of interfaces are attached to the same domain;
a step where the mobile node decides to allocate the same address to the two or more interfaces attached to the same domain when determining the attachment to the same domain, and requests each proxy node connected to each of the two or more interfaces to bind the same address to each link identifier of the two or more interfaces; and
a step where the proxy node performs binding based on the request and forwards, to the mobile node, a packet destined to the same address of the mobile node.

2. The address allocation method according to claim 1, further comprising
a step where the mobile node sends an address allocation server an allocation request for the same address so that the address allocation server will allocate the same address based on the allocation request.

3. An address allocation system for allocating an address to each of a plurality of interfaces of a mobile node, the system comprising:
means for causing the mobile node to receive network information including a domain identifier from a network through each of the plurality of interfaces, and determine, based on the domain identifier in the network information received, whether two or more of the plurality of interfaces are attached to the same domain;
means for causing the mobile node to decide to allocate the same address to the two or more interfaces attached to the same domain when determining the attachment to the same domain, and request each proxy node connected to each of the two or more interfaces to bind the same address to each link identifier of the two or more interfaces; and
causing the proxy node to perform binding based on the request and forward, to the mobile node, a packet destined to the same address of the mobile node.

4. The address allocation system according to claim 3, further comprising
means for causing the mobile node to send an address allocation server an allocation request for the same address so that the address allocation server will allocate the same address based on the allocation request.

5. A mobile node in an address allocation system for allocating an address to each of a plurality of interfaces of the mobile node, the mobile comprising:
means for receiving network information including a domain identifier from a network through each of the plurality of interfaces, and determining, based on the domain identifier in the network information received, whether two or more of the plurality of interfaces are attached to the same domain; and
means for deciding to allocate the same address to the two or more interfaces attached to the same domain when determining the attachment to the same domain, and requesting each proxy node connected to each of the two or more interfaces to bind the same address to each link identifier of the two or more interfaces.

6. The mobile node according to claim 5, further comprising
means for sending an address allocation server an allocation request for the same address so that the same address allocated by the address allocation server based on the allocation request is set on the two or more interfaces in common.

7. A proxy node in an address allocation system for allocating an address to each of a plurality of interfaces of a mobile node, the proxy node comprising:
means for binding the same address, allocated to two or more of the plurality of interfaces, to each link identifier of the two or more interfaces based on a request from the mobile node; and
means for forwarding s packet, destined to the same address of the mobile node, to the mobile node through a link corresponding to the link identifier bound.

8. An address allocation method for allocating an address to each of a plurality of interfaces of a mobile node, the method comprising:
a step of allocating a different address to each of the plurality of interfaces of the mobile node;
a step where the mobile node receives network information including a domain identifier from a network through each of the plurality of interfaces, and determines, based on the domain identifier in the network information received, whether two or more of the plurality of interfaces are attached to the same domain;
a step where the mobile node decides to use any of the two or more interfaces attached to the same domain as a backup for another interface or as backups for each other when the mobile node determines the attachment to the same domain, and requests each proxy node connected to each of the two or more interfaces to bind the address allocated to each of the two or more interfaces to a link identifier as the backup interface; and
a step where the proxy node performs binding based on the request and forwards, to the backup interface of the mobile node, a packet destined to the address of the mobile node.

9. The address allocation method according to claim 8, further comprising
a step where the proxy node performs binding based on the request, and determines whether the plurality of different addresses are generated with a same home network prefix, and binds the same home network prefix to the link identifier in common if generated with the same home network prefix.

10. An address allocation system for allocating an address to each of a plurality of interfaces of a mobile node, the system comprising:
means for allocating a different address to each of the plurality of interfaces of the mobile node;
means for causing the mobile node to receive network information including a domain identifier from a network through each of the plurality of interfaces, and determine, based on the domain identifier in the network information received, whether two or more of the plurality of interfaces are attached to the same domain;
means for causing the mobile node to decide to use any of the two or more interfaces attached to the same domain as a backup for another interface or as backups for each other when the mobile node determines the attachment to the same domain, and request each proxy node connected to each of the two or more interfaces to bind the address allocated to each of the two or more interfaces to a link identifier as a backup interface; and
causing the proxy node to perform binding based on the request and forward, to the backup interface of the mobile node, a packet destined to the address of the mobile node.

11. The address allocation system according to claim 10, further comprising
means for causing the proxy node to perform binding based on the request and determine whether the plurality of different addresses are generated with a same home network prefix, and binds the same home network prefix to the link identifier in common if generated with the same home network prefix.

12. A mobile node in an address allocation system for allocating an address to each of a plurality of interfaces of the mobile node, the mobile comprising:
means for allocating a different address to each of the plurality of interfaces of the mobile node;
means for receiving network information including a domain identifier from a network through each of the plurality of interfaces, and determining, based on the domain identifier in the network information received, whether two or more of the plurality of interfaces are attached to the same domain; and
means for deciding to use any of the two or more interfaces attached to the same domain as a backup for another interface or as backups for each other when determining the attachment to the same domain, and requesting each proxy node connected to each of the two or more interfaces to bind the address allocated to each of the two or more interfaces to a link identifier as a backup interface.

13. A proxy node in an address allocation system for allocating an address to each of a plurality of interfaces of a mobile node, the proxy node comprising:
means for binding a different address, allocated to each of the plurality of interfaces, to each link identifier of the plurality of interfaces based on a request from the mobile node;
means for binding the address, allocated to each of the plurality of interfaces, to a link identifier as a backup interface based on the request from the mobile node, so that any of the two or more interfaces attached to the same domain will be a backup for another interface or as backups for each other; and
means for forwarding a packet, destined to the address of the mobile node, to the backup interface of the mobile node based on the binding.

14. The proxy node according to claim 13, further comprising
means for determining whether the plurality of different addresses are generated with the same home network prefix, and binding the same home network prefix is bound to the link identifier in common if generated with the home network prefix.
